# EUROPEAN PATENT APPLICATION

(11) **EP 2 479 999 A1**
(43) Date of publication of application: **25.07.2012**
(21) Application number: 11819806.8
(22) Date of filing: 11.08.2011
(51) Int. Cl.: H04N 13/00, H04N 7/025, H04N 7/03, H04N 7/035

(54) **3D-IMAGE-DATA TRANSMISSION DEVICE, 3D-IMAGE-DATA TRANSMISSION METHOD, 3D-IMAGE-DATA RECEPTION DEVICE, AND 3D-IMAGE-DATA RECEPTION METHOD**

(30) Priority: 23.08.2010 JP 2010186638
(71) Applicant: Sony Corporation, Tokyo 108-0075 (JP)
(72) Inventor: TSUKAGOSHI, Ikuo, Tokyo 108-0075 (JP)
(74) Representative: Ealey, Douglas Ralph
(86) International application number: PCT/JP2011/068403
(87) International publication number: WO 2012/026342

(57) **Abstract**

To facilitate a processing in the receiving side. A subtitle processing unit 123 converts 2D image subtitle data into stereoscopic image subtitle data conforming to a transmission format of the stereoscopic image data. In the receiving side, it is possible to easily generate display data of the left-eye subtitle overlapped with the left-eye image data of the stereoscopic image data and display data of the right-eye subtitle overlapped with the right-eye image data of stereoscopic image data based on the stereoscopic image subtitle data, and it is possible to facilitate the processing. In addition to the stereoscopic image data and stereoscopic image subtitle data, display control information including area information of the region partition set as display areas of the left-eye and right-eye subtitles and shift information is transmitted. It is possible to dynamically change disparity assigned to a part of or the entire subtitle in synchronization with the change of the image content. The shift information is generated at a sub-pixel precision level.

## Description

### TECHNICAL FIELD

The present invention relates to a stereoscopic image data transmission device, a method of transmitting stereoscopic image data, a stereoscopic image data reception device, and a method of receiving stereoscopic image data, and more particularly, to a stereoscopic image data transmission device for transmitting data of overlapping information such as captions along with stereoscopic image data.

### BACKGROUND ART

For example, Patent Document 1 proposes a transmission format of stereoscopic image data using television broadcasting waves. In this transmission format, stereoscopic image data having left-eye image data and right-eye image data is transmitted, and a stereoscopic image is displayed using binocular disparity.

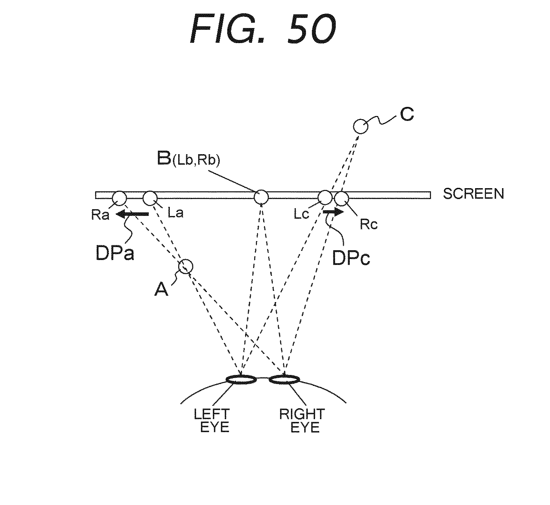

Fig. 50 illustrates a relation between display positions of left and right images of an object on a screen and a reproduction position of a stereoscopic image thereof in the case of stereoscopic image display using binocular disparity. For example, as illustrated on the screen, for an object A displayed such that the left image La is deviated to the right, and the right image Ra is deviated to the left, the left and right lines of sight intersect above the screen surface. Therefore, a reproduction position of the stereoscopic image thereof is positioned above the screen surface. DPa denotes a horizontal disparity vector for an object A.

For example, for an object B of which the left image Lb and the right image Rb are displayed in the same position on a screen as illustrated in the drawing, the left and right lines of sight intersect on the screen surface. Therefore, a reproduction position of the stereoscopic image thereof is on the screen surface. For example, for an object C displayed on a screen such that the left image Lc is deviated to the left, and the right image Rc is deviated to the right as illustrated in the drawing, the left and right lines of sight intersect at the inner side with respect to the screen surface. Therefore, a reproduction position of the stereoscopic image thereof is located in an inner side with respect to the screen surface. DPc denotes a horizontal disparity vector for an object C.

In the related art, there are known a side-by-side format, a top-and-bottom format, and the like as a transmission format of stereoscopic image data. For example, when the receiving side is a set-top box, it is envisaged that the received stereoscopic image data is transmitted to a monitor device such as a television receiver through a digital interface such as a high-definition multimedia interface (HDMI) without converting the transmission format. For example, Non-Patent Document 1 discloses a specification of the HDMI in detail.

In the related art, there is known a method of transmitting data of overlapping information such as captions along with 2D image data from the transmitting side. In this case, in the receiving side, display data for displaying the overlapping information is generated by processing data of the overlapping information, and a 2D image where the overlapping information is overlapped is obtained by overlapping the display data with the 2D image data.

### CITATION LIST

### PATENT DOCUMENT

Patent Document 1: Japanese Patent Application Laid-Open No. 2005-6114

### NON-PATENT DOCUMENT

Non-Patent Document 1: High-Definition Multimedia Interface Specification Version 1.4, June 5, 2009

### SUMMARY OF THE INVENTION

### PROBLEMS TO BE SOLVED BY THE INVENTION

It is envisaged that data of the overlapping information such as captions is also transmitted when the stereoscopic image data is transmitted as described above. When data of the overlapping information is for a 2D image, for example, it is necessary for the set-top box described above to perform a process of generating display data overlapped with the stereoscopic image data according to a transmission format of stereoscopic image data from data of the overlapping information for a 2D image. For this reason, the set-top box that receives the stereoscopic image data is necessary to have a high-level processing function. This increases costs of the set-top box.

The invention has been made to facilitate a processing in the receiving side when data of the overlapping information such as captions is transmitted along with stereoscopic image data.

### SOLUTIONS TO PROBLEMS

According to an aspect of the invention, there is provided a stereoscopic image data transmission device including: an image data output unit that outputs stereoscopic image data of a predetermined transmission format having left-eye image data and right-eye image data; an overlapping information data output unit that outputs data of overlapping information overlapped on an image for the left-eye image data and the right-eye image data; an overlapping information data processing unit that converts data of the overlapping information output from the overlapping information data output unit into transmission overlapping information data having data of left-eye overlapping information corresponding to the left-eye image data included in the stereoscopic image data of the predetermined transmission format and data of right-eye overlapping information corresponding to the right-eye image data included in the stereoscopic image data of the predetermined transmission format; a display control information generating unit that generates area information of a left-eye control area including a part of or the entire area on the left-eye image where the left-eye overlapping information based on the transmission overlapping information data output from the overlapping information data processing unit is overlapped and a right-eye control area including a part of or the entire area on the right-eye image where the right-eye overlapping information based on the transmission overlapping information data output from the overlapping information data processing unit is overlapped, and display control information including shift information of the left-eye control area and the right-eye control area; and a data transmitting unit that transmits a multiplexed data stream having a first data stream including the stereoscopic image data output from the image data output unit and a second data stream including the transmission overlapping information data output from the overlapping information data processing unit and the display control information generated by the display control information generating unit.

In the invention, the image data output unit outputs stereoscopic image data of a predetermined transmission format having left-eye image data and right-eye image data. For example, the transmission format of stereoscopic image data includes a side-by-side format, a top-and-bottom format, and the like.

The overlapping information data output unit outputs data of the overlapping information overlapped with an image based on the left-eye image data and the right-eye image data. Here, the overlapping information includes information such as captions, graphics, and texts overlapped with the image. The overlapping information data processing unit converts data of the overlapping information into transmission overlapping information data having data of the left-eye overlapping information and data of the right-eye overlapping information.

Here, data of the left-eye overlapping information is data corresponding to the left-eye image data included in the stereoscopic image data of a predetermined transmission format described above, and is data for generating display data of the left-eye overlapping information overlapped with the left-eye image data of the stereoscopic image data in the receiving side. In addition, data of the right-eye overlapping information is data corresponding to the right-eye image data included in the stereoscopic image data of a predetermined transmission format described above, and is data for generating display data of the right-eye overlapping information overlapped with the right-eye image data of the stereoscopic image data in the receiving side.

Data of the overlapping information is, for example, subtitle data (subtitle data of DVB). The overlapping information data processing unit generates data of the left-eye overlapping information and data of the right-eye overlapping information as follows. For example, if the transmission format of stereoscopic image data is the side-by-side format, the overlapping information data processing unit generates data of the left-eye overlapping information and data of right-eye overlapping information as data of different objects in the same region. For example, if the transmission format of stereoscopic image data is the top-and-bottom format, the overlapping information data processing unit generates data of the left-eye overlapping information and data of the right-eye overlapping information as data of an object of different regions.

The display control information generating unit generates display control information. The display control information includes area information of the left-eye control area and the right-eye control area and shift information. Here, the left-eye control area is an area including a part of or the entire area on the left-eye image where the left-eye overlapping information based on the transmission overlapping information data described above is overlapped. Similarly, the right-eye control area is an area including a part of or the entire area on the right-eye image where the right-eye overlapping information based on the transmission overlapping information data described above is overlapped. The left-eye control area and the right-eye control area are set, for example, in response to user's manipulation or automatically.

For example, the shift information is shift information for assigning disparity to the display positions of the left-eye overlapping information in the left-eye control area and the right-eye overlapping information in the right-eye control area. The shift information is generated, for example, based on disparity information between the left-eye image based on the left-eye image data and the right-eye image based on the right-eye image data. For example, the shift information is shift information for equally moving the display positions of the left-eye overlapping information in the left-eye control area and the right-eye overlapping information in the right-eye control area. For example, the shift information is shift information for assigning disparity to the display positions of the left-eye overlapping information in the left-eye control area and the right-eye overlapping information in the right-eye control area and equally moving the display positions of the left-eye overlapping information in the left-eye control area and the right-eye overlapping information in the right-eye control area.

The data transmitting unit transmits a multiplexed data stream including first and second data streams. The first data stream includes stereoscopic image data of a predetermined transmission format output from the image data output unit. The second data stream includes transmission overlapping information data output from the overlapping information data processing unit and display control information generated by the display control information generating unit.

In this manner, in the invention, the transmission overlapping information data having data of the left-eye overlapping information and data of the right-eye overlapping information conforming to the transmission format along with the stereoscopic image data are transmitted. For this reason, in the receiving side, it is possible to easily generate display data of the left-eye overlapping information overlapped with the left-eye image data of the stereoscopic image data and display data of the right-eye overlapping information overlapped with the right-eye image data of the stereoscopic image data based on the transmission overlapping information data, so that it is possible to facilitate the processing.

In the invention, in addition to the stereoscopic image data and the transmission overlapping information data, display control information including area information of the left-eye control area and the right-eye control area and shift information are transmitted. In the receiving side, it is possible to perform shift-adjustment based on shift information for display data of the left-eye overlapping information and the right-eye overlapping information such that the display position of the left-eye overlapping information in the left-eye control area and the display position of the right-eye overlapping information in the right-eye control area are shifted.

For this reason, if the shift information is shift information for assigning disparity to display positions of the left-eye overlapping information in the left-eye control area and the right-eye overlapping information in the right-eye control area, in the receiving side, for display of the overlapping information such as subtitles (captions), it is possible to maintain optimal conformity of depth perception between each object in an image for a part of or the entire overlapping information. If the shift information is shift information for equally moving the display positions of the left-eye overlapping information in the left-eye control area and the right-eye overlapping information in the right-eye control area, in the receiving side, for display of the overlapping information such as subtitles (captions), it is possible to move the display position for a part of or the entire overlapping information.

In the invention, for example, the shift information included in the display control information generated by the display control information generating unit may be shift information sequentially updated in each frame of a predetermined number of frame periods for displaying the overlapping information. In this case, in the receiving side, it is possible to shift the display positions of the left-eye overlapping information in the left-eye control area and the right-eye overlapping information in the right-eye control area using the shift information sequentially updated in each frame of a predetermined number of frame periods for displaying the overlapping information. For this reason, it is possible to dynamically change the disparity assigned to a part of or the entire overlapping information in synchronization with the change of the image content. In addition, it is possible to obtain a display effect for dynamically changing the display position of a part of or the entire overlapping information.

In the invention, for example, the shift information included in the display control information generated by the display control information generating unit may include shift information of the first frame of a predetermined number of frame periods and offset information for the shift information of previous frames subsequent to the second frame and subsequent frames. In this case, it is possible to suppress a data amount of the shift information.

In the invention, for example, the display control information generating unit may sequentially generate display control information in each frame of a predetermined number of frame periods for displaying overlapping information. In this case, in the receiving side, it is possible to shift the display positions of the left-eye overlapping information in the left-eye control area and the right-eye overlapping information in the right-eye control area using the display control information (shift information) sequentially updated in each frame of a predetermined number of frame periods for displaying overlapping information. For this reason, it is possible to dynamically change disparity assigned to a part of or the entire overlapping information in synchronization with the change of the image content. In addition, it is possible to obtain a display effect for dynamically changing the display position of a part of or the entire overlapping information.

In the invention, for example, the shift information generated by the display control information generating unit may have a sub-pixel precision level. In this case, in the receiving side, if the display positions of the left-eye overlapping information in the left-eye control area and the right-eye overlapping information in the right-eye control area are shifted using the shift information sequentially updated in each frame of a predetermined number of frame periods for displaying overlapping information, it is possible to smoothly perform the shift operation and improve image quality.

In the invention, for example, the display control information generated by the display control information generating unit may include command information for controlling on/off of display of the left-eye overlapping information in the left-eye control area and the right-eye overlapping information in the right-eye control area. In this case, in the receiving side, based on command information, it is possible to turn on or off display of the overlapping information using the area information and the shift information included in the display control information along with the command information based on the command information.

In the invention, for example, the data transmitting unit may insert identification information for identifying that the second data stream includes transmission overlapping information data conforming to a transmission format of the stereoscopic image data into the multiplexed data stream. In this case, in the receiving side, using the identification information, it is possible to identify whether or not the second data stream includes transmission overlapping information data (overlapping information data for a stereoscopic image) conforming to the transmission format of the stereoscopic image data.

According to another aspect of the invention, there is provided an stereoscopic image data reception device including: a data receiving unit that receives a multiplexed data stream having a first data stream and a second data stream, the first data stream including stereoscopic image data of a predetermined transmission format having left-eye image data and right-eye image data, and the second data stream including transmission overlapping information data having data of left-eye overlapping information corresponding to the left-eye image data included in the stereoscopic image data of the predetermined transmission format and data of right-eye overlapping information corresponding to the right-eye image data, area information of a left-eye control area including a part of or the entire area on a left-eye image where left-eye overlapping information based on the transmission overlapping information data is overlapped and a right-eye control area including a part of or the entire area on a right-eye image where right-eye overlapping information based on the transmission overlapping information data is overlapped, and display control information having shift information of the left-eye control area and the right-eye control area; an image data obtaining unit that obtains the stereoscopic image data from the first data stream having the multiplexed data stream received by the data receiving unit; an overlapping information data obtaining unit that obtains the transmission overlapping information data from the second data stream of the multiplexed data stream received by the data receiving unit; a display control information obtaining unit that obtains display control information from the second data stream of the multiplexed data stream received by the data receiving unit; a display data generating unit that generates display data for overlappingly displaying left-eye overlapping information and right-eye overlapping information on the left-eye image and the right-eye image based on the transmission overlapping information data obtained by the overlapping information data obtaining unit; a shift adjustment unit that receives display data generated by the display data generating unit and outputs by shifting and adjusting positions of display data of the left-eye control area and the right-eye control area indicated by area information of the display control information obtained by the display control information obtaining unit based on shift information of the display control information obtained by the display control information obtaining unit; and a data combining unit that overlaps display data subjected to the shifting and adjustment and output from the shift adjustment unit with the stereoscopic image data obtained by the image data obtaining unit to obtain output stereoscopic image data.

In the invention, the data receiving unit receives the multiplexed data stream having first and second data streams. The first data stream includes stereoscopic image data of a predetermined transmission format having the left-eye image data and the right-eye image data.

The second data stream includes transmission overlapping information data (overlapping information data for a stereoscopic image) having data of the left-eye overlapping information and data of the right-eye overlapping information and display control information. The data of the left-eye overlapping information is data corresponding to the left-eye image data included in the stereoscopic image data of a predetermined transmission format described above, and is data for generating display data of the left-eye overlapping information overlapped with the left-eye image data of the stereoscopic image data. In addition, the data of the right-eye overlapping information is data corresponding to the right-eye image data included in the stereoscopic image data of a predetermined transmission format described above, and is data for generating display data of the right-eye overlapping information overlapped with the right-eye image data of the stereoscopic image data.

The second data stream includes display control information having area information of the left-eye control area and the right-eye control area and shift information. The left-eye control area is an area including a part of or the entire area on the left-eye image where the left-eye overlapping information based on the transmission overlapping information data is overlapped. Similarly, the right-eye control area is an area including a part of or the entire area on the right-eye image where the right-eye overlapping information based on the transmission overlapping information data described above is overlapped.

For example, the shift information is shift information for assigning disparity to the display positions of the left-eye overlapping information in the left-eye control area and the right-eye overlapping information in the right-eye control area. For example, the shift information is shift information for equally moving the display positions of the left-eye overlapping information in the left-eye control area and the right-eye overlapping information in the right-eye control area. For example, the shift information is shift information for assigning disparity to the display positions of the left-eye overlapping information in the left-eye control area and the right-eye overlapping information in the right-eye control area and equally moving the display positions of the left-eye overlapping information in the left-eye control area and the right-eye overlapping information in the right-eye control area.

The image data obtaining unit obtains stereoscopic image data of a predetermined transmission format from the first data stream of the multiplexed data stream received by the data receiving unit. In addition, the overlapping information data obtaining unit obtains transmission overlapping information data from the second data stream of the multiplexed data stream received by the data receiving unit. Furthermore, the display control information obtaining unit obtains the display control information from the second data stream of the multiplexed data stream received by the data receiving unit.

The display data generating unit generates display data for overlappingly displaying overlapping information on the left-eye image and the right-eye image based on the transmission overlapping information data obtained by the overlapping information data obtaining unit. The display data generated by the display data generating unit is input to the shift adjustment unit. In addition, the shift adjustment unit shift-adjusts and outputs the position of the display data of the left-eye control area and the right-eye control area indicated by the area information of the display control information obtained by the display control information obtaining unit based on the shift information of the display control information obtained by the display control information obtaining unit.

The data combining unit then obtains the output stereoscopic image data by overlapping the display data subjected to the shift adjustment and output from the shift adjustment unit with the stereoscopic image data obtained by the image data obtaining unit. The output stereoscopic image data is transmitted to an external device, for example, through a digital interface unit such as HDMI.

In this manner, in the invention, the transmission overlapping information data having data of the left-eye overlapping information and data of the right-eye overlapping information conforming to the transmission format is received along with the stereoscopic image data. For this reason, in the display data generating unit, it is possible to easily generate display data of the left-eye overlapping information overlapped with the left-eye image data of the stereoscopic image data and display data of the right-eye overlapping information overlapped with the right-eye image data of the stereoscopic image data based on the transmission overlapping information data, and it is possible to facilitate the processing.

In the invention, the display control information including area information of the left-eye control area and the right-eye control area and shift information is received in addition to the stereoscopic image data and the transmission overlapping information data. For this reason, it is possible to perform shift-adjustment based on the shift information for the display data of the left-eye overlapping information and the right-eye overlapping information such that the display position of the left-eye overlapping information in the left-eye control area and the display position of right-eye overlapping information in the right-eye control area are shifted.

Therefore, if the shift information is shift information for assigning disparity to the display positions of the left-eye overlapping information in the left-eye control area and the right-eye overlapping information in the right-eye control area, for display of the overlapping information such as subtitles (captions), it is possible to maintain optimal conformity of depth perception between each object in an image for a part or the entire overlapping information. In addition, if the shift information is shift information for equally moving the display positions of the left-eye overlapping information in the left-eye control area and the right-eye overlapping information in the right-eye control area, for display of the overlapping information such as subtitles (captions), it is possible to move the display position for a part of or the entire overlapping information.

In the invention, the stereoscopic image data receiver may further include an identification information obtaining unit that obtains the identification information from the multiplexed data stream received by the data receiving unit; and an overlapping information data identifying unit that identifies that the second data stream includes the transmission overlapping information data conforming to a transmission format of the stereoscopic image data based on the identification information obtained by the identification information obtaining unit, in which the multiplexed data stream received by the data receiving unit includes identification information for identifying that the second data stream includes the transmission overlapping information data conforming to a transmission format of the stereoscopic image data. In this case, using the identification information, it is possible to identify whether or not the second data stream includes transmission overlapping information data (overlapping information data for a stereoscopic image) conforming to a transmission format of the stereoscopic image data.

### EFFECT OF THE INVENTION

In the invention, the transmission overlapping information data having data of the left-eye overlapping information and data of the right-eye overlapping information conforming to a transmission format thereof is transmitted from the transmitting side to the receiving side along with the stereoscopic image data. For this reason, in the receiving side, it is possible to easily generate display data of the left-eye overlapping information overlapped with the left-eye image data of the stereoscopic image data and the display data of the right-eye overlapping information overlapped with the right-eye image data of the stereoscopic image data based on the transmission overlapping information data, and it is possible to facilitate the processing. Therefore, in the receiving side, it is possible to easily perform a process of transmitting the received stereoscopic image data to a monitor device such as a television receiver through a digital interface such as HDMI without converting the transmission format.

In the invention, in addition to the stereoscopic image data and the transmission overlapping information data, the display control information including area information of the left-eye control area and the right-eye control area and shift information is transmitted from the transmitting side to the receiving side. For this reason, in the receiving side, it is possible to perform shift-adjustment based on the shift information for the display data of the left-eye overlapping information and the right-eye overlapping information such that the display position of the left-eye overlapping information in the left-eye control area and the display position of the right-eye overlapping information in the right-eye control area are shifted.

Therefore, if the shift information is shift information for assigning disparity to the display positions of the left-eye overlapping information in the left-eye control area and the right-eye overlapping information in the right-eye control area, in the receiving side, for display of the overlapping information such as subtitles (captions), it is possible to maintain optimal conformity of depth perception between each object in an image for a part of or the entire overlapping information. In addition, if the shift information is shift information for equally moving the display positions of the left-eye overlapping information in the left-eye control area and the right-eye overlapping information in the right-eye control area, in the receiving side, for display of the overlapping information such as subtitles (captions), it is possible to move the display position for a part of or the entire overlapping information.

### BRIEF DESCRIPTION OF DRAWINGS

Fig. 1 is a block diagram illustrating an exemplary configuration of an image transceiver system according to an embodiment of the invention.
Fig. 2 is a block diagram illustrating an exemplary configuration of a transmission data generating unit in a broadcasting station.
Fig. 3 is a diagram illustrating image data having a pixel format of 1920 x 1080p.
Fig. 4 is a diagram illustrating a "top-and-bottom" format, a "side-by-side" format, and a "frame-sequential" format, respectively, as a stereoscopic image data (3D image data) transmission format.
Fig. 5 is a diagram illustrating an example for detecting a disparity vector of the right-eye image against the left-eye image.
Fig. 6 is a diagram illustrating a process of obtaining a disparity vector using a block-matching technique.
Fig. 7 is a diagram illustrating a down-sizing process performed by the disparity information creating unit of the transmission data generating unit.
Fig. 8 is a diagram illustrating that the shift information has a sub-pixel precision level, that is, the shift information includes an integer number portion and a decimal number portion.
Fig. 9 is a diagram illustrating an exemplary configuration of a transport stream (bit stream data) including a video elementary stream, a subtitle elementary stream, and an audio elementary stream.
Fig. 10 is a diagram illustrating a structure of page_composition _segment (PCS) of the subtitle data.
Fig. 11 is a diagram illustrating a matching relation between each value of "segment_type" and the segment types.
Fig. 12 is a diagram illustrating information "Component_type = 0 x 15, 0 x 25" representing a 3D subtitle format that is newly defined.
Fig. 13 is a diagram illustrating an exemplary configuration of the subtitle data (including display control information) created and transmitted by the subtitle processing unit.
Fig. 14 is a diagram illustrating display on/off control using command information included in the RPCS segment.
Fig. 15 is a diagram illustrating display on/off control using command information included in the RPCS segment.
Fig. 16 is a diagram illustrating a display state where display on/off control using command information included in the RPCS segment is not provided, which describes an exemplary configuration (cases A to E) of subtitle data (including a disparity information group).
Fig. 17 is a diagram conceptually illustrating how to create stereoscopic image subtitle data in a case where a transmission format of stereoscopic image data is the side-by-side format.
Fig. 18 is a diagram illustrating examples of a region, an object, and a region partition using stereoscopic image subtitle data.
Fig. 19 is a diagram illustrating an example (Example 1) for creating each segment of the stereoscopic image subtitle data when the transmission format of stereoscopic image data is the side-by-side format.
Fig. 20 is a diagram illustrating an example (Example 2) for creating each segment of the stereoscopic image subtitle data when the transmission format of stereoscopic image data is the side-by-side format.
Fig. 21 is a diagram conceptually illustrating how to create stereoscopic image subtitle data when the transmission format of stereoscopic image data is the top-and-bottom format.
Fig. 22 is a diagram illustrating examples of the region, the object, and the region partition using the stereoscopic image subtitle data.
Fig. 23 is a diagram illustrating an example (Example 1) for creating each segment of the stereoscopic image subtitle data when the transmission format of stereoscopic image data is the top-and-bottom format.
Fig. 24 is a diagram illustrating an example (Example 2) for creating each segment of the stereoscopic image subtitle data when the transmission format of stereoscopic image data is the top-and-bottom format.
Fig. 25 is a diagram illustrating a syntax example of the region partition composition segment (RPCS).
Fig. 26 is a diagram illustrating a first syntax example of "Region_Partition_payload()" included in the RPCS.
Fig. 27 is a diagram illustrating a second syntax example of "Region _Partition_payload()" included in the RPCS.
Fig. 28 is a diagram (1/3) illustrating a third syntax example of "Region _Partition_payload()" included in the RPCS.
Fig. 29 is a diagram (2/3) illustrating a third syntax example of "Region_Partition_payload()" included in the RPCS.
Fig. 30 is a diagram (3/3) illustrating a third syntax example of "Region _Partition_payload()" included in the RPCS.
Fig. 31 is a diagram (1/2) illustrating principal semantics of data of the RPCS.
Fig. 32 is a diagram (2/2) illustrating principal semantics of data of the RPCS.
Fig. 33 is a diagram illustrating an example in which disparity assigned to the display positions of the left-eye subtitle in the left-eye RP and the right-eye subtitle in the right-eye RP is updated on a frame basis in the receiving side when the transmission format of stereoscopic image data is the side-by-side format.
Fig. 34 is a diagram illustrating an example in which disparity assigned to the display positions of the left-eye subtitle in the left-eye RP and the right-eye subtitle of the right-eye RP is updated on a frame basis in the receiving side when the transmission format of stereoscopic image data is the side-by-side format.
Fig. 35 is a diagram illustrating an example in which disparity assigned to the display positions of the left-eye subtitle in the left-eye RP and the right-eye subtitle in the right-eye RP is updated on a frame basis in the receiving side when the transmission format of stereoscopic image data is the top-and-bottom format.
Fig. 36 is a diagram illustrating an example in which disparity assigned to the display positions of the left-eye subtitle in the left-eye RP and the right-eye subtitle of the right-eye RP is updated on a frame basis in the receiving side when the transmission format of the stereoscopic image data is the top-and-bottom format.
Fig. 37 is a diagram schematically illustrating flows of the stereoscopic image data (side-by-side format) and the subtitle data from the broadcasting station through the set-top box to the television receiver.
Fig. 38 is a diagram schematically illustrating flows of the stereoscopic image data (top-and-bottom format) and the subtitle data from the broadcasting station through the set-top box to the television receiver.
Fig. 39 is a diagram illustrating a display example of captions on an image and depth perception of a background, a near view, an object, and captions.
Fig. 40 is a diagram illustrating a display example of captions on an image and left-eye caption LGI and right-eye caption RGI for displaying captions.
Fig. 41 is a block diagram illustrating an exemplary configuration of the set-top box of the image transceiver system.
Fig. 42 is a block diagram illustrating an exemplary configuration of the bit stream processing unit of the set-top box.
Fig. 43 is a diagram schematically illustrating an interpolation processing example in the set-top box when shifting is performed by a 1/2 pixel in a horizontal direction.
Fig. 44 is a block diagram illustrating an exemplary configuration of the television receiver of the image transceiver system.
Fig. 45 is a block diagram illustrating another configuration example of the image transceiver system.
Fig. 46 is a diagram (1/3) illustrating another third syntax example of "Region_Partition_payload()" included in the RPCS.
Fig. 47 is a diagram (2/3) illustrating another third syntax example of "Region_Partition_payload()" included in the RPCS.
Fig. 48 is a diagram (3/3) illustrating another third syntax example of "Region_Partition_payload()" included in the RPCS.
Fig. 49 is a diagram illustrating principal semantics of data of the RPCS.
Fig. 50 is a diagram illustrating a relation between display positions of left and right images of an object on a screen and a reproduction position of a stereoscopic image thereof in stereoscopic image display using binocular disparity.

### MODE FOR CARRYING OUT THE INVENTION

Hereinafter, embodiments of the invention (hereinafter, referred to as an "embodiment") will be described. Description will be made in the following sequence.
1. Embodiments
2. Modifications

### <1. Embodiments>

### [Exemplary Configuration of Image Transceiver System]

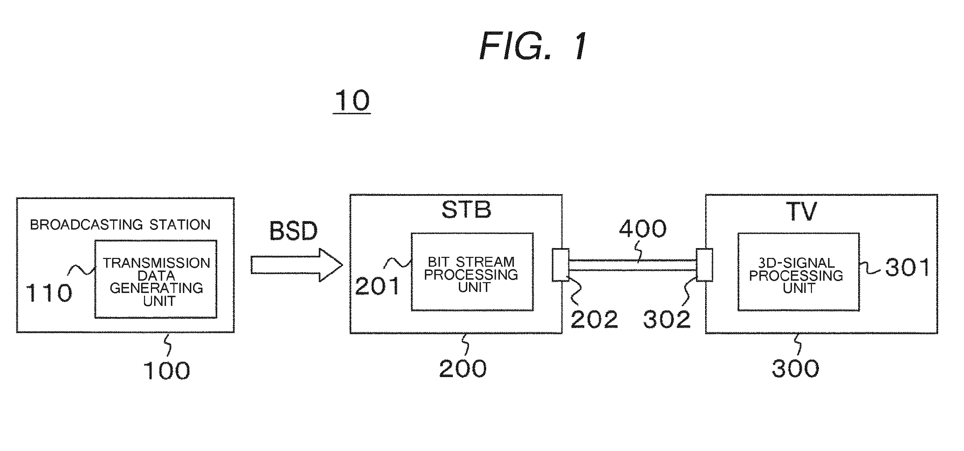

Fig. 1 illustrates an exemplary configuration of the image transceiver system 10 according to an embodiment of the invention. The image transceiver system 10 includes a broadcasting station 100, a set-top box (STB) 200, and a television receiver (TV) 300.

The set-top box 200 and the television receiver 300 are connected using a digital interface such as high definition multimedia interface (HDMI). The set-top box 200 and the television receiver 300 are connected using a HDMI cable 400. The set-top box 200 is provided with a HDMI terminal 202. The television receiver 300 is provided with a HDMI terminal 302. One end of the HDMI cable 400 is connected to the HDMI terminal 202 of the set-top box 200, and the other end of the HDMI cable 400 is connected to the HDMI terminal 302 of the television receiver 300.

### [Description of Broadcasting Station]

The broadcasting station 100 transmits bit stream data BSD through airwaves. The broadcasting station 100 has a transmission data generating unit 110 that generates bit stream data BSD. This bit stream data BSD includes stereoscopic image data, audio data, overlapping information data, and the like. The stereoscopic image data has a predetermined transmission format and includes left-eye image data and right-eye image data for displaying a stereoscopic image. The overlapping information includes, in general, captions, graphics information, text information, and the like. In this embodiment, the overlapping information includes subtitles (captions).

### [Exemplary Configuration of Transmission Data Generating Unit]

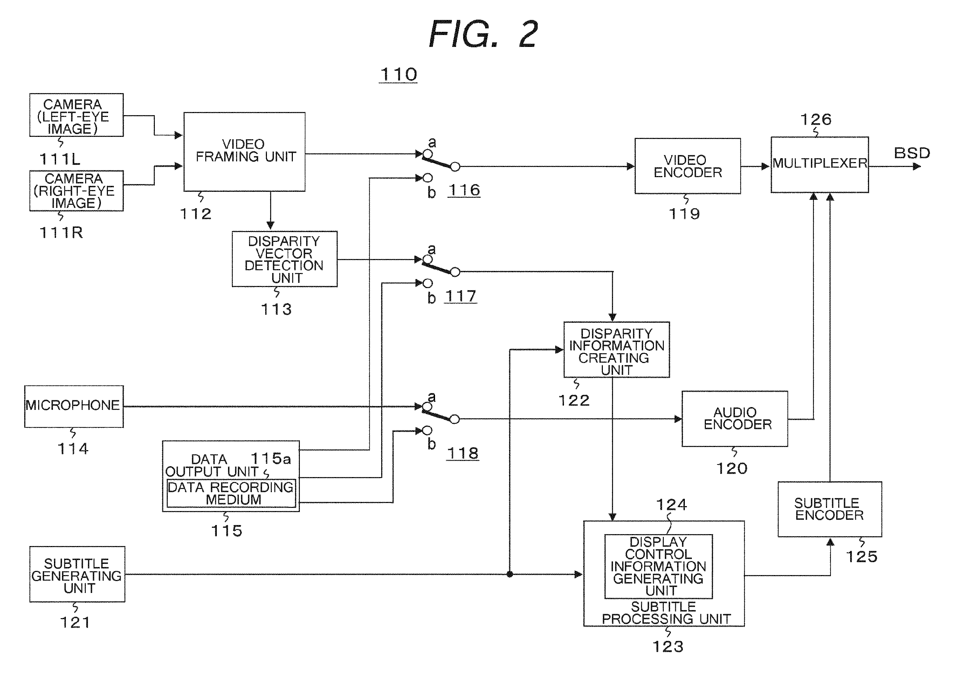

Fig. 2 illustrates an exemplary configuration of the transmission data generating unit 110 in the broadcasting station 100. The transmission data generating unit 110 includes cameras 111L and 111R, a video framing unit 112, a disparity vector detection unit 113, a microphone 114, a data extraction unit 115, and switches 116 to 118. In addition, the transmission data generating unit 110 includes a video encoder 119, an audio encoder 120, a subtitle generating unit 121, a disparity information creating unit 122, a subtitle processing unit 123, a subtitle encoder 125, and a multiplexer 125.

The camera 111L captures a left-eye image to obtain left-eye image data for displaying a stereoscopic image. The camera 111R captures a right-eye image to obtain right-eye image data for displaying a stereoscopic image. The video framing unit 112 processes the left-eye image data obtained by the camera 111L and the right-eye image data obtained by the camera 111R into stereoscopic image data (3D image data) according to a transmission format. The video framing unit 112 serves as an image data output unit.

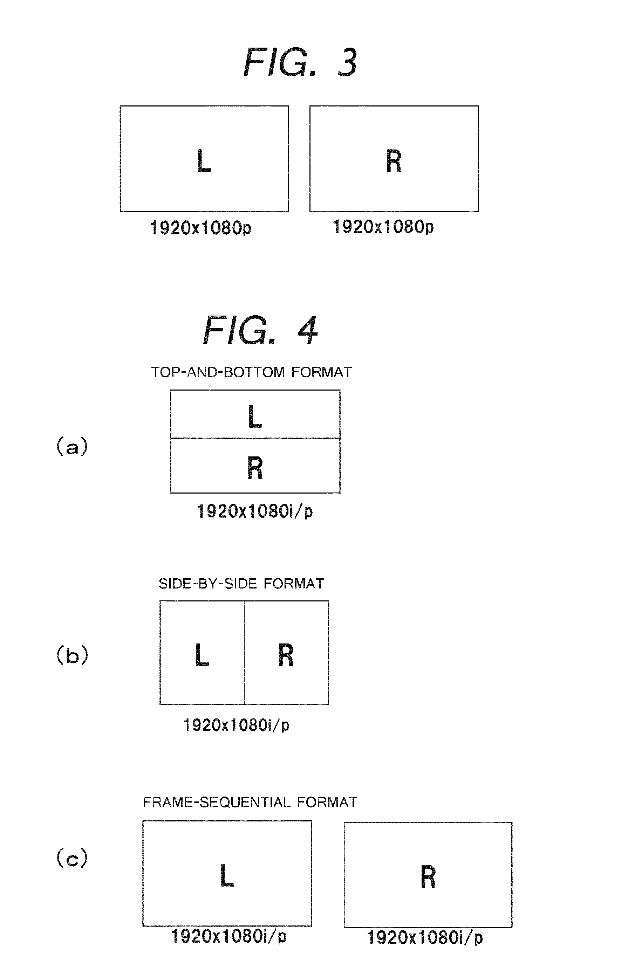

Description will now be made for a transmission format of subtitle data. Here, although description will be made for the following first to third transmission formats, other transmission formats may be used. In addition, as illustrated in Fig. 3, description will be exemplarily made for a case where each of left-eye (L) image data and right-eye (R) image data has a pixel format of a predefined resolution such as 1920 x 1080p.

The first transmission format is a top-and-bottom format, in which data of each line for the left-eye image data is transmitted in a front half of a vertical direction, and data of each line for the left-eye image data is transmitted in a rear half of a vertical direction as illustrated in Fig. 4(a). In this case, the number of lines for the left-eye image data and the right-eye image data is reduced to 1/2 so that a vertical resolution is halved in comparison with the original signal.

The second transmission format is a side-by-side format, in which pixel data for the left-eye image data is transmitted in a front half of a horizontal direction, and pixel data for the right-eye image data is transmitted in a rear half of a horizontal direction as illustrated in Fig. 4(b). In this case, the size of pixel data of a horizontal direction for each of the left-eye image data and the right-eye image data is reduced to 1/2 so that a horizontal resolution is halved in comparison with the original signal.

The third transmission format is a frame-sequential format, in which the left-eye image data and the right-eye image data are sequentially switched and transmitted on a frame basis as illustrated in Fig. 4(c). This frame-sequential format is often referred to as a "full frame" format or a "backward compatible" format.

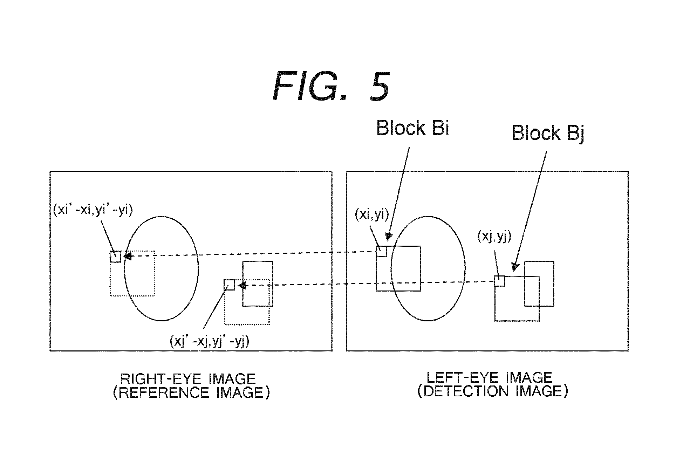

The disparity vector detection unit 113 detects a disparity vector, for example, for each pixel of an image based on the left-eye image data and the right-eye image data. An example for detecting the disparity vector will now be described. Here, an example for detecting the disparity vector of the right-eye image against the left-eye image will be described. As illustrated in Fig. 5, the left-eye image is used as a detection image, and the right-eye image is used as a reference image. In this example, a disparity vector at the positions (xi, yi) and (xj, yj) will be detected.

A case where the disparity vector is detected at the position (xi, yi) will be exemplarily described. In this case, the pixel at the position (xi, yi) is located in the upper left side of the left-eye image. For example, a pixel block (disparity detection block) Bi of 4 x 4, 8 x 8, or 16 x 16 pixels is set. In addition, in the right-eye image, a pixel block that matches the pixel block Bi is searched.

In this case, a search range centered at the position (xi, yi) is set in the right-eye image. Each pixel within that search range is set as a sequential highlighting pixel, and a comparison block of, for example, 4 x 4, 8 x 8, or 16 x 16 pixels similar to that of the pixel block Bi described above is sequentially set.

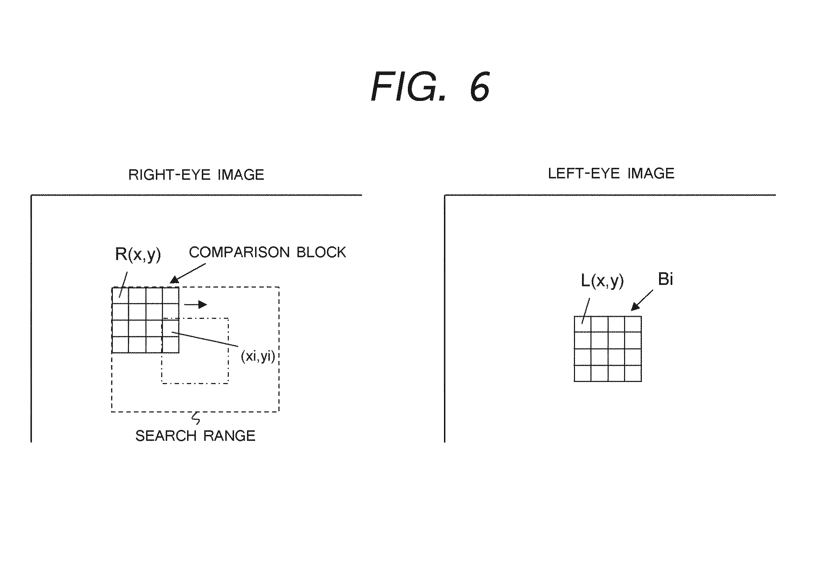

A total sum of absolute value of the differences for each corresponding pixel is obtained between the pixel block Bi and the comparison block that is sequentially set. Here, as illustrated in Fig. 6, if the pixel value of the pixel block Bi is set as L(x, y), and the pixel value of the comparison block is set as R(x, y), a total sum of absolute value of the differences between the pixel block Bi and any comparison block is represented as Σ|L(x, y) - R(x, y)|.

When the search range set in the right-eye image includes n pixels, n total sums S1 to Sn are obtained finally, and the minimum total sum Smin is selected from the n total sums S1 to Sn. In addition, a position (xi', yi') of the upper left pixel is obtained from the comparison block where the total sum Smin is obtained. As a result, the disparity vector at the position (xi, yi) is detected as (xi' - xi, yi' - yi). Although detailed description is not provided, even for the disparity vector at the position (xj, yj), a pixel at the position (xj, yj) is set in the upper left side of the left-eye image. For example, a pixel block Bj of 4 x 4, 8 x 8, or 16 x 16 pixels is set, and detection is made through a similar processing procedure.

Returning to Fig. 2, the microphone 114 detects sound corresponding to the images captured by the cameras 111L and 111R to obtain audio data.

The data recording medium 115a is detachably installed in the data extraction unit 115. The data recording medium 115a includes a disc-shaped recording medium, a semiconductor memory, and the like. The data recording medium 115a stores stereoscopic image data including the left-eye image data and the right-eye image data by matching with audio data, data on the overlapping information, and disparity vectors. The data extraction unit 115 extracts the stereoscopic image data, the audio data, and the disparity vector from the data recording medium 115a and outputs them. The data extraction unit 115 serves as an image data output unit.

Here, the stereoscopic image data recorded in the data recording medium 115a correspond to stereoscopic image data obtained by the video framing unit 112. In addition, the audio data recorded in the data recording medium 115a correspond to audio data obtained by the microphone 114. In addition, the disparity vector recorded in the data recording medium 115a corresponds to a disparity vector detected by the disparity vector detection unit 113.

The switch 116 selectively extracts the stereoscopic image data obtained by the video framing unit 112 and the stereoscopic image data output from the data extraction unit 115. In this case, the switch 116 is connected to the α-side in a live mode and extracts the stereoscopic image data obtained by the video framing unit 112. In a reproduction mode, the switch 116 is connected to the b-side and extracts the stereoscopic image data output from the data extraction unit 115.

The switch 117 selectively extracts the disparity vector detected by the disparity vector detection unit 113 or the disparity vector output from the data extraction unit 115. In this case, the switch 117 is connected to the a-side and extracts the disparity vector detected by the disparity vector detection unit 113 in a live mode. In a reproduction mode, the switch 117 is connected to the b-side and extracts the disparity vector output from the data extraction unit 115.

The switch 118 selectively extracts the audio data obtained by the microphone 114 or the audio data output from the data extraction unit 115. In this case, the switch 118 is connected to the a-side and extracts the audio data obtained by the microphone 114 in a live mode. In a reproduction mode, the switch 118 is connected to the b-side and extracts the audio data output from the data extraction unit 115.

The video encoder 119 encodes the stereoscopic image data extracted by the switch 116 based on MPEG4-AVC, MPEG2, VC-1, and the like to create video data streams (video elementary streams). The audio encoder 120 encodes the audio data extracted by the switch 118 based on AC3, AAC, and the like to create audio data streams (audio elementary streams).

The subtitle generating unit 121 generates subtitle data which is caption data for digital video broadcasting (DVB). The subtitle data is subtitle data for 2D images. The subtitle generating unit 121 serves as an overlapping information data output unit.

The disparity information creating unit 122 performs a down-sizing process for the disparity vector (horizontal disparity vector) of each pixel extracted by the switch 117 to create disparity information (horizontal disparity vector) to be applied to the subtitles. The disparity information creating unit 122 serves as a disparity information output unit. In addition, the disparity information applied to the subtitles can be added on a page basis, on a region basis, or on an object basis. In addition, it is not necessary to create the disparity information using the disparity information creating unit 122, and it may be separately supplied from an external unit.

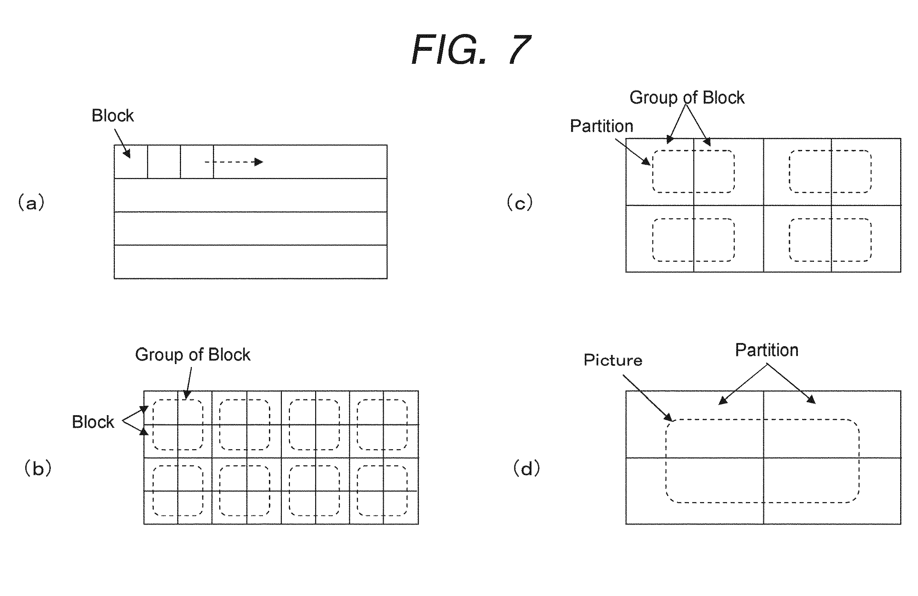

Fig. 7 illustrates an exemplary down-sizing process performed by the disparity information creating unit 122. Initially, the disparity information creating unit 122 obtains the disparity vector of each block using the disparity vector of each pixel as illustrated in Fig. 7(a). As described above, the block corresponds to an upper layer of a pixel located in the lowermost layer and is configured by dividing an image (picture) area into a predetermined size in horizontal and vertical directions. In addition, the disparity vectors of each block are obtained, for example, by selecting the greatest disparity vector out of the disparity vectors of overall pixels existing in that block.

Then, the disparity information creating unit 122 obtains disparity vectors of each group of blocks using the disparity vectors of each block as illustrated in Fig. 7(b). The group of blocks corresponds to an upper layer of the block and is obtained by collectively grouping a plurality of neighboring blocks. In the example of Fig. 7(b), each group includes four blocks tied by the dotted-lined box. In addition, the disparity vectors of each group are obtained, for example, by selecting the greatest disparity vector out of overall disparity vectors in that group.

Then, the disparity information creating unit 122 obtains disparity vectors of each partition using the disparity vectors of each group as illustrated in Fig. 7(c). The partition corresponds to an upper layer of a group and is obtained by collectively grouping a plurality of neighboring groups. In the example of Fig. 7(c), each partition includes two groups tied by the dotted-lined box. In addition, the disparity vectors of each partition are obtained, for example, by selecting the greatest disparity vector out of disparity vectors of overall groups within that partition.

Then, the disparity information creating unit 122 obtains a disparity vector of the entire picture (entire image) located in an uppermost layer using the disparity vectors of each partition as illustrated in Fig. 7(d). In the example of Fig. 7(d), the entire picture includes four partitions tied by the dotted-lined box. In addition, the disparity vector of the entire picture is obtained, for example, by selecting the greatest disparity vector out of disparity vectors of overall partitions included in the entire picture.

In this manner, the disparity information creating unit 122 can obtain disparity vectors of each area for each layer of blocks, groups, partitions, and the entire picture by performing a down-sizing process for the disparity vectors of each pixel located in the lowermost layer. In addition, in the example of the down-sizing process of Fig. 7, disparity vectors of four layers including a block layer, a group layer, a partition layer, and the entire picture in addition to a pixel layer are obtained finally. However, the number of layers, a method of dividing areas of each layer, and the number of areas are not limited thereto.

Returning to Fig. 2, the subtitle processing unit 123 converts the subtitle data generated in the subtitle generating unit 121 into stereoscopic image (3D image) subtitle data conforming to a transmission format of the stereoscopic image data extracted by the switch 116. The subtitle processing unit 123 serves as an overlapping information data processing unit, and the subtitle data for the stereoscopic image data after conversion constitutes transmission overlapping information data.

The stereoscopic image subtitle data includes left-eye subtitle data and right-eye subtitle data. Here, the left-eye subtitle data is data corresponding to the left-eye image data included in the stereoscopic image data described above, and is data for generating display data of the left-eye subtitle overlapping with the left-eye image data included in the stereoscopic image data in the receiving side. In addition, the right-eye subtitle data is data corresponding to the right-eye image data included in the stereoscopic image data described above, and is data for generating display data of the right-eye subtitle overlapping with the right-eye image data included in the stereoscopic image data in the receiving side.

The subtitle processing unit 123 includes a display control information generating unit 124. The display control information generating unit 124 generates display control information including area information of the region partition and shift information. The region partition includes a left-eye region partition (left-eye RP) and a right-eye region partition (right-eye RP). The left-eye region partition serves as a left-eye control area and the right-eye region partition serves as a right-eye control area. Hereinafter, the left-eye region partition is referred to as a left-eye RP, and the right-eye region partition is referred to as a right-eye RP.

Here, the left-eye RP is set in an area including a part of or the entire area on the left-eye image where the left-eye subtitle (left-eye overlapping information) using the transmission overlapping information data described above overlaps. Similarly, the right-eye RP is set in an area including a part of or the entire area on the right-eye image where the right-eye subtitle (left-eye overlapping information) using the transmission overlapping information data described above overlaps. The areas of the left-eye RP and the right-eye RP are set, for example, based on user's manipulation or automatically, for each subtitle data generated by the subtitle generating unit 121. In this case, the areas of the left-eye RP and the right-eye RP are set such that the left-eye subtitle in the left-eye RP matches the right-eye subtitle in the right-eye RP.

The shift information includes shift information for assigning disparity to the display positions of the left-eye subtitle in the left-eye RP and the right-eye subtitle in the right-eye RP. The display control information generating unit 124 generates the shift information, for example, based on the disparity information to be applied to the aforementioned subtitle created by the disparity information creating unit 122 as described above.

Here, the shift information "Disparity1" of the left-eye RP and the shift information "Disparity 1" of the right-eye PR are determined such that their absolute values are equal to each other, and a difference therebetween corresponds to the disparity information. For example, when the transmission format of the stereoscopic image data is the side-by-side format, a value corresponding to the disparity information is "Disparity/2." For example, when the transmission format of stereoscopic image data is the top-and-bottom format, the value corresponding to the disparity information is set to "Disparity."

In addition, the shift information includes, for example, shift information for equally moving display positions of the left-eye subtitle in the left-eye RP and the right-eye subtitle in the right-eye RP. The display control information generating unit 124 generates the shift information, for example, based on user's manipulation or automatically.

The display control information generating unit 124 may generate shift information sequentially updated in each frame for a predetermined number of frame periods for which a subtitle is displayed as the aforementioned shift information. Hereinafter, for the purpose of brevity, the shift information in each frame for a predetermined number of frame periods will be referred to as a "shift information group." In the present embodiment, shift information of each frame included in the shift information group includes offset information for the shift information of the previous frame so that a data amount is suppressed.

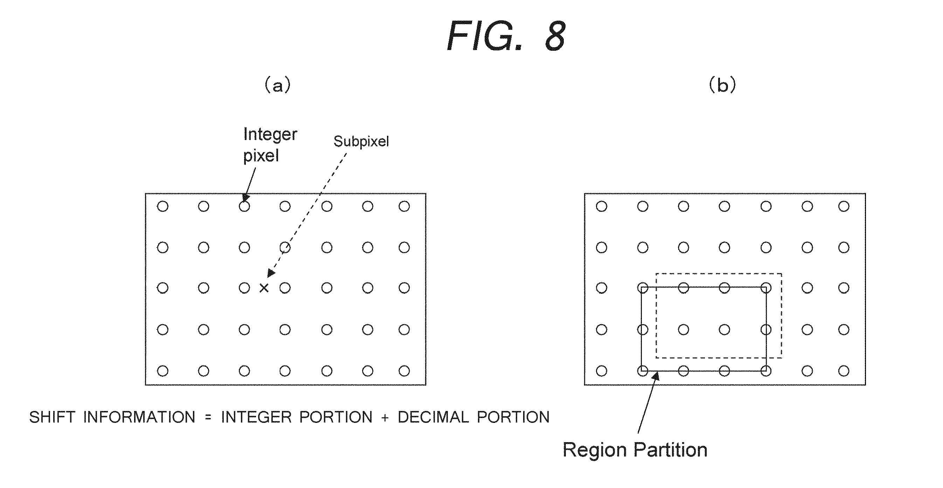

In the present embodiment, the display control information generating unit 124 generates the aforementioned shift information so as to have a sub-pixel precision level. In this case, the shift information includes an integer number portion and a decimal number portion as illustrated in Fig. 8(a). In addition, the sub-pixels are obtained by subdividing pixels (integer pixel) of a digital image.

If the shift information has a sub-pixel precision level, it is possible to shift-adjust display positions of the left-eye subtitle in the left-eye RP and the right-eye subtitle in the right-eye RP in the receiving side with a sub-pixel precision level. Fig. 8(b) schematically illustrates an example of shift adjustment with a sub-pixel precision level, in which a display position of a subtitle in the region partition is shift-adjusted from a solid-lined position to a dotted-lined position.

In addition, the subtitle data includes segments such as a display definition segment (DDS), a page composition segment (PCS), a region composition segment (RSC), and an object data segment (ODS). DDS defines a size of the HDTV display. PCS defines a position of a region in a page. RCS defines a size of a region, an encoding mode of an object, and an initial position of an object. ODS includes encoded pixel data.

In the present embodiment, a region partition composition segment (RPCS) is newly defined. In addition, the display control information generated by the display control information generating unit 124 is inserted into the RPCS segment as described above. The processing of the subtitle processing unit 123 will be described in detail below.

The subtitle encoder 125 generates a subtitle data stream (subtitle elementary stream) including the display control information and stereoscopic image subtitle data output from the subtitle processing unit 123. The multiplexer 126 multiplexes each data stream from the video encoder 119, the audio encoder 120, and the subtitle encoder 125 to obtain a multiplexed data stream as a bit stream data (transport stream) BSD.

In the present embodiment, the multiplexer 126 inserts, into the subtitle data stream, identification information for identifying that the stereoscopic image subtitle data is included. Specifically, "Stream_content ('0x03' = DVBsubtitles) & Component_type (for 3D target)" is described in Component_Descriptor inserted into an event information table (EIT). "Component_type (for 3D target)" is newly defined to describe the stereoscopic image subtitle data.

The operation of the transmission data generating unit 110 of Fig. 2 will be described in brief. The camera 111L captures the left-eye image. The left-eye image data for displaying a stereoscopic image obtained by the camera 111L is supplied to the video framing unit 112. In addition, the camera 111R captures the right-eye image. The right-eye image data for displaying a stereoscopic image obtained by the camera 111R is supplied to the video framing unit 112. In the video framing unit 112, the left-eye image data and the right-eye image data are processed in a state conforming to the transmission format to obtain stereoscopic image data (refer to Figs. 4(a) to 4(c)).

The stereoscopic image data obtained by the video framing unit 112 is supplied to a stationary terminal in the a-side of the switch 116. In addition, the stereoscopic image data obtained by the data extraction unit 115 is supplied to a stationary terminal in the b-side of the switch 116. In a live mode, the switch 116 is connected to the a-side, and the stereoscopic image data obtained by the video framing unit 112 is extracted from the switch 116. In a reproduction mode, the switch 116 is connected to the b-side, and the stereoscopic image data output from the data extraction unit 115 is extracted from the switch 116.

The stereoscopic image data extracted from the switch 116 is supplied to the video encoder 119. In the video encoder 119, encoding such as MPEG4-AVC, MPEG2, VC-1, and the like is performed for the stereoscopic image data to generate a video data stream including encoded video data. The video data stream is supplied to the multiplexer 126.

The audio data obtained by the microphone 114 is supplied to a stationary terminal in the a-side of the switch 118. In addition, the audio data obtained by the data extraction unit 115 is supplied to a stationary terminal in the b-side of the switch 118. In a live mode, the switch 118 is connected to the a-side, and the audio data obtained by the microphone 114 is extracted from the switch 118. In a reproduction mode, the switch 118 is connected to the b-side, and the audio data output from the data extraction unit 115 is extracted from the switch 118.

The audio data extracted by the switch 118 is supplied to the audio encoder 120. In the audio encoder 120, encoding such as MPEG-2 Audio AAC or MPEG-4 AAC is performed for the audio data to generate an audio data stream including the encoded audio data. The audio data stream is supplied to the multiplexer 126.

The left-eye image data and the right-eye image data obtained by the cameras 111L and 111R, respectively, are supplied to the disparity vector detection unit 113 through the video framing unit 112. In the disparity vector detection unit 113, disparity vectors of each pixel are detected based on the left-eye image data and the right-eye image data. The disparity vector is supplied to a stationary terminal in the a-side of the switch 117. In addition, the disparity vector of each pixel output from the data extraction unit 115 is supplied to a stationary terminal in the b-side of the switch 117.

In a live mode, the switch 117 is connected to the a-side, and the disparity vectors of each pixel obtained by the disparity vector detection unit 113 are extracted from the switch 117. In a reproduction mode, the switch 117 is connected to the b-side, and the disparity vectors of each pixel output from the data extraction unit 115 are extracted from the switch 117.

In the subtitle generating unit 121, subtitle data (for a 2D image) as caption data of DVB is generated. The subtitle data is supplied to the disparity information creating unit 122 and the subtitle processing unit 123.

The disparity vectors of each pixel extracted from the switch 117 are supplied to the disparity information creating unit 122. In the disparity information creating unit 122, a down-sizing process is performed for the disparity vector of each pixel to create disparity information (horizontal disparity vector = Disparity) to be applied to the subtitle. This disparity information is supplied to the subtitle processing unit 123.

In the subtitle processing unit 123, the 2D image subtitle data generated by the subtitle generating unit 121 is converted into the stereoscopic image subtitle data conforming to the transmission format of the stereoscopic image data extracted by the switch 116 described above. This stereoscopic image subtitle data includes left-eye subtitle data and right-eye subtitle data.

The display control information generating unit 124 of the subtitle processing unit 123 generates display control information including the shift information and area information of the region partition. The region partition includes left-eye region partition (left-eye RP) and right-eye region partition (right-eye RP) as described above. For this reason, as the area information, area information of the left-eye RP and area information of the right-eye RP are generated. Similarly, as the shift information, shift information of the left-eye RP and shift information of the right-eye RP are generated.

As described above, the left-eye RP is set, for example, based on user's manipulation or automatically, in an area including a part of or the entire area on the left-eye image where the left-eye subtitle using stereoscopic image subtitle data (transmission overlapping information data) overlaps. Similarly, the right-eye RP is set, based on user's manipulation or automatically, in an area including a part of or the entire area on the right-eye image where the right-eye subtitle using the stereoscopic image subtitle data (transmission overlapping information data) overlaps.

For example, the shift information includes shift information for assigning disparity to the display positions of the left-eye subtitle in the left-eye RP and the right-eye subtitle in the right-eye RP. The display control information generating unit 124 generates the shift information, for example, based on the disparity information to be applied to the subtitle created by the disparity information creating unit 122. For example, the shift information includes shift information for equally moving the display positions of the left-eye subtitle in the left-eye RP and the right-eye subtitle of the right-eye RP. The display control information generating unit 124 generates the shift information, for example, based on user's manipulation or automatically.

The stereoscopic image subtitle data and the display control information obtained by the subtitle processing unit 123 are supplied to the subtitle encoder 125. The subtitle encoder 125 generates the subtitle data stream including the display control information and the stereoscopic image subtitle data. This subtitle data stream includes the newly defined RPCS including the display control information along with the segments such as DDS, PCS, RCS, or ODS where the stereoscopic image subtitle data is inserted.

Each data stream from the video encoder 119, the audio encoder 120, and the subtitle encoder 125 is supplied to the multiplexer 126 as described above. In addition, in the multiplexer 126, each data stream is packetized and multiplexed to obtain the multiplexed data stream as bit stream data (transport stream) BSD.

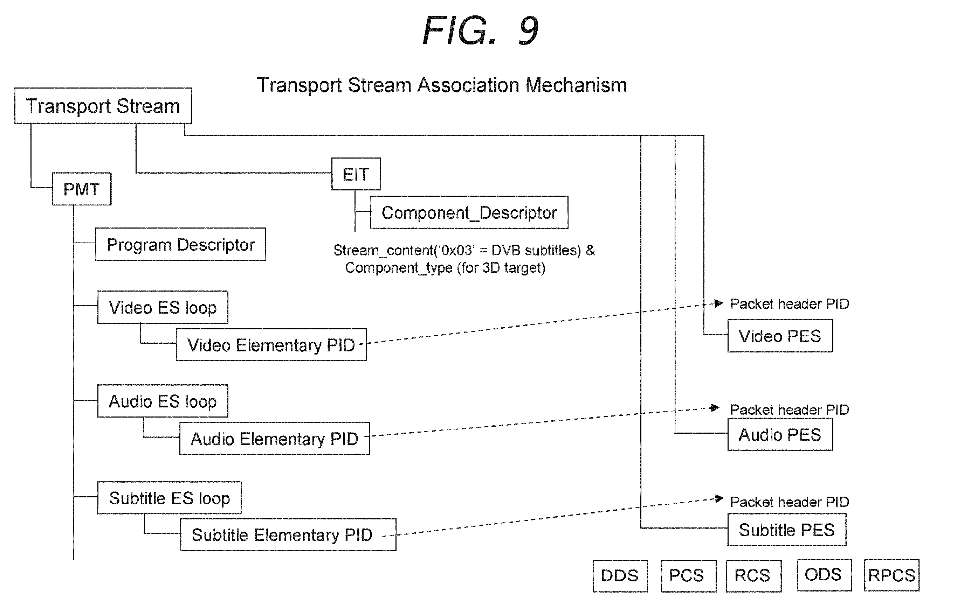

Fig. 9 illustrates an exemplary configuration of the transport stream (bit stream data). In the transport stream, a PES packet obtained by packetizing each elementary stream is included. The present configuration example includes a PES packet "Video PES" of the video elementary stream, a PES packet "Audio PES" of the audio elementary stream, and a PES packet "Subtitle PES" of the subtitle elementary stream.

In the present embodiment, the subtitle elementary stream (subtitle data stream) includes stereoscopic image subtitle data and display control information. This stream includes conventional segments such as a display definition segment (DDS), a page composition segment (PCS), a region composition segment (RCS), and an object data segment (ODS) already known in the art.

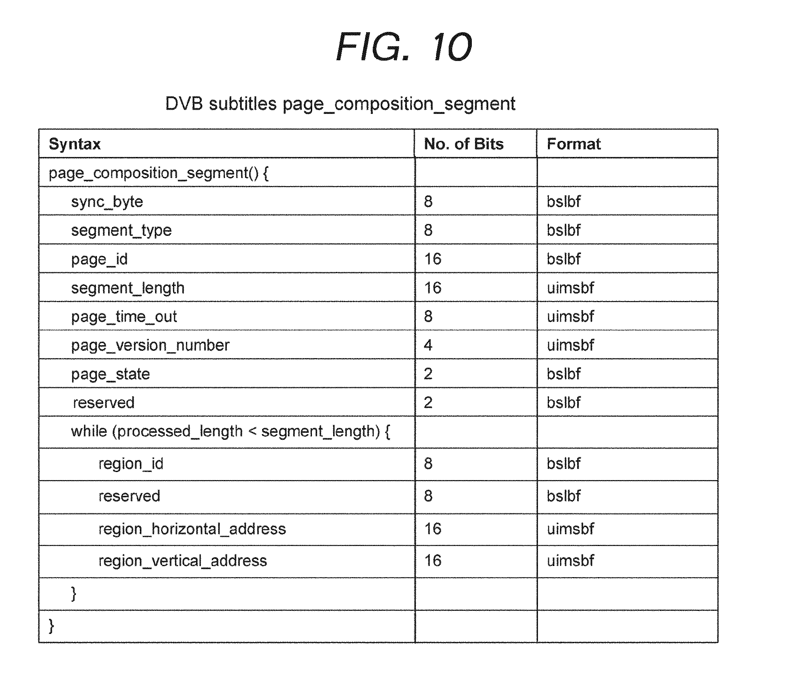

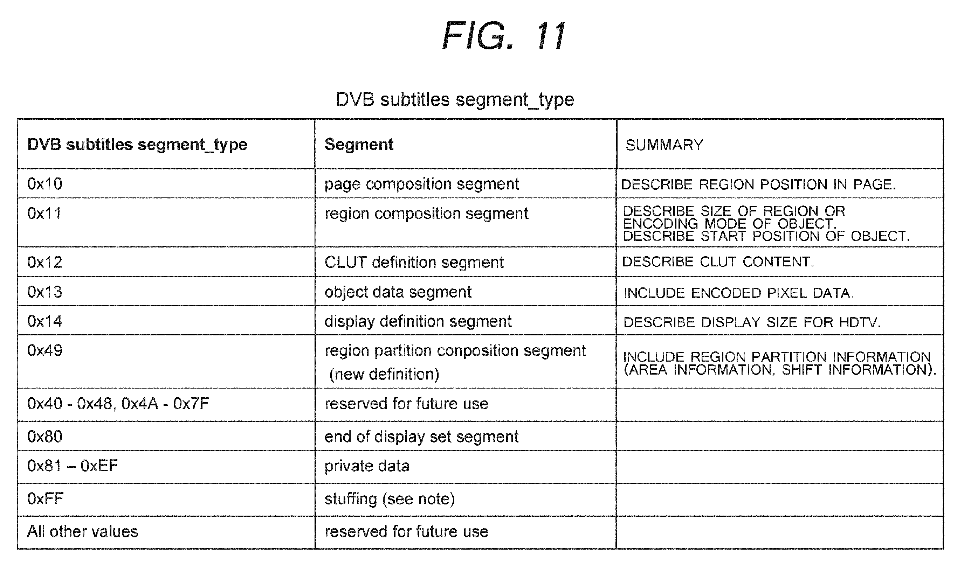

Fig. 10 illustrates syntax of page_composition_segment (PCS). The segment type of the PCS is "0x10" as illustrated in Fig. 11. "region-horizontal-address" and "region_vertical_address" represent initial positions of the region. In addition, syntax is not provided as drawing for other segments such as DDS, RSC, and ODS. For example, as illustrated in Fig. 11, the segment type of DDS is "0x14." For example, as illustrated in Fig. 11, the segment type of RCS is "0x11." For example, as illustrated in Fig. 11, the segment type of ODS is "0x13"

This subtitle data includes a region partition composition segment (RPCS). The RPCS includes region partition information (area information and shift information). For example, as illustrated in Fig. 11, the segment type of the RPCS is "0x49." Syntax of the RPCS segment will be described in detail below.

Returning to Fig. 9, the transport stream includes a program map table (PMT) as program specific information (PSI). The PSI is information representing to which program each elementary stream included in the transport stream belongs. In addition, the transport stream includes an event information table (EIT) as serviced information (SI) managed on an event basis. Metadata on a program basis is described in the EIT.

In the PMT, there is a program descriptor for describing information regarding the entire program. In addition, in the PMT, there is an elementary loop having information regarding each elementary stream. In this configuration example, there are a video elementary loop, an audio elementary loop, and a subtitle elementary loop. In each elementary loop, information such as a packet identifier (PID) is arranged for each stream, and, although not illustrated in the drawings, a descriptor for describing information regarding the elementary stream is also arranged.

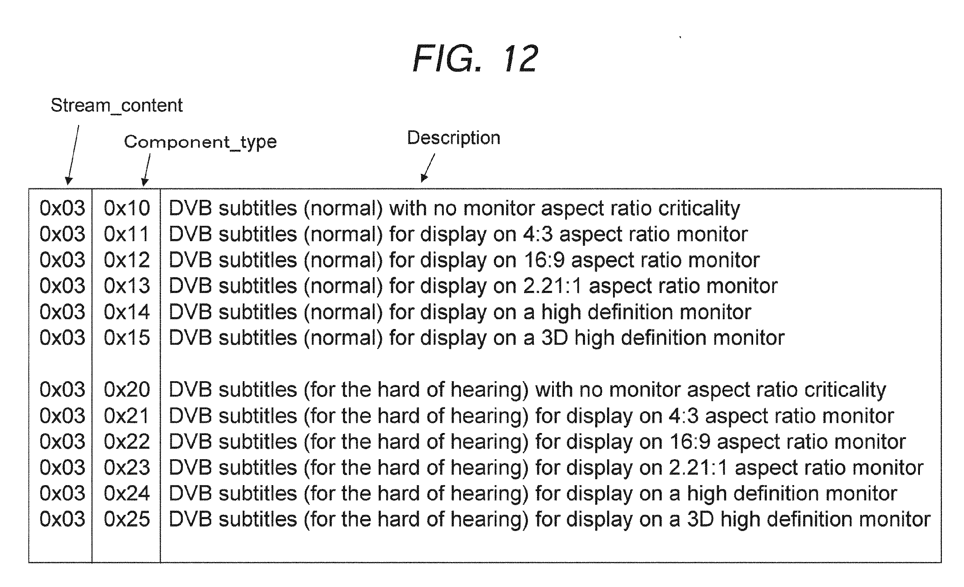

A component descriptor (Component_Descriptor) is inserted into the EIT. In the present embodiment, "Stream_content ('0x03' = DVB subtitles) & Component_type (for 3D target)" is described in the component descriptor. As a result, it is possible to identify that the stereoscopic image subtitle data is included in the subtitle data stream. In the present embodiment, if the "stream_content" of the "component_descriptor" representing the delivery content describes subtitles as illustrated in Fig. 12, information (Component_type = 0x15, 0x25) representing a format of the 3D subtitle is newly defined.

### [Processing in Subtitle Processing Unit]

The processing of the subtitle processing unit 123 of the transmission data generating unit 110 illustrated in Fig. 2 will be described in detail. The subtitle processing unit 123 converts 2D image subtitle data into stereoscopic image subtitle data as described above. In addition, the subtitle processing unit 123 generates display control information (including area information of the left-eye RP and the right-eye RP and shift information) in the display control information generating unit 124 as described above.

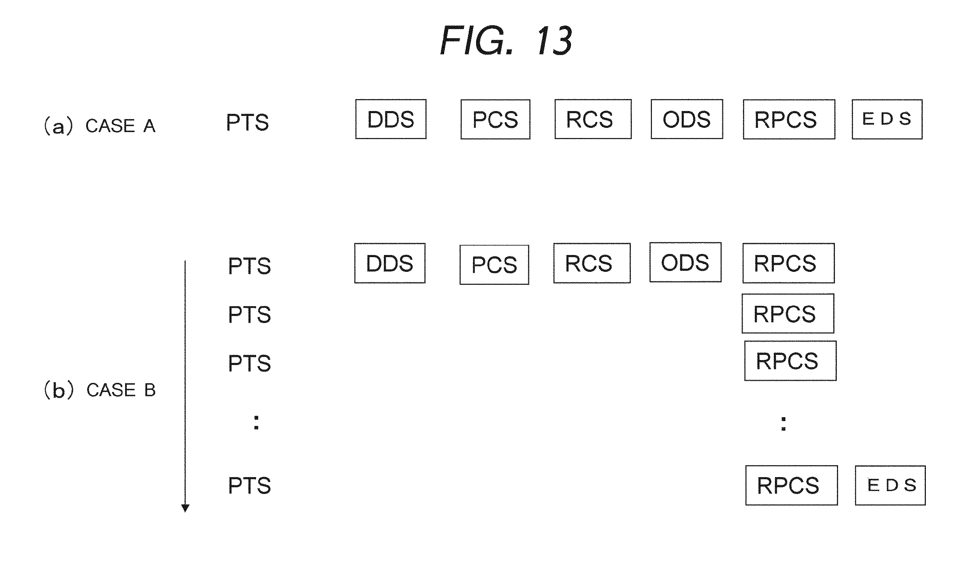

For example, "Case A" and "Case B" will be considered for syntax of the subtitle data (including display control information) created by the subtitle processing unit 123 and transmitted as illustrated in Fig. 13. In the syntax of "Case A," a set of segments associated with subtitle display of DDS, PCS, RCS, ODS, RPCS, and EDS are created before a predetermined number of frame periods for displaying subtitles is initiated, and time information (PTS) is added so that they are collectively transmitted. Hereinafter, a predetermined number of frame periods for displaying subtitles will be referred to as a "subtitle display period."

In the syntax of "Case A," the display positions of the left-eye subtitle in the left-eye RP and the right-eye subtitle in the right-eye RP can be dynamically controlled by inserting shift information (shift information group) sequentially updated in each frame of the subtitle display period into the RPCS segment. As a result, in the receiving side, it is possible to dynamically change disparity assigned to a part of or the entire subtitles in synchronization with change of the image content or dynamically change the display positions of a part of or the entire subtitles.

In the syntax of "Case A," in order to insert the shift information (shift information group) sequentially updated in each frame of the subtitle display period into the RPCS segment, it is necessary to provide the shift information group in a lump before the subtitle display period. For this reason, in the syntax of "Case A," a method of dynamically controlling the display positions of the left-eye subtitle in the left-eye RP and the right-eye subtitle in the right-eye RP by inserting the shift information group into the RPCS segment can be applied in a reproduction mode.

In the syntax of "Case B," a set of segments associated with subtitle display of DDS, PCS, RCS, ODS, and RPCS are created before a predetermined number of frame periods (subtitle display period) for displaying subtitles is initiated, and time information (PTS) is added so that they are collectively transmitted. Then, the RPCS segment in which the shift information thereof is sequentially updated is created in each frame of the subtitle display period, and time information (PTS) is added so that they are transmitted. In addition, the EDS segment is created along with the RPCS segment in the last frame, and time information (PTS) is added so that they are transmitted.

In the syntax of "Case B," since the RPCS segment in which the shift information is sequentially updated is transmitted in each frame of the subtitle display period, it is possible to dynamically control the display positions of the left-eye subtitle in the left-eye RP and the right-eye subtitle in the right-eye RP. As a result, in the receiving side, it is possible to dynamically change the disparity assigned to a part of or the entire subtitle in synchronization with change of the image content or dynamically change the display positions of a part of or the entire subtitle.

In the syntax of "Case B," unlike the syntax of "Case A" described above, it is not necessary to provide the shift information group in a lump before the subtitle display period. For this reason, in the syntax of "Case B," a method of dynamically controlling the display position of the left-eye subtitle in the left-eye RP and the right-eye subtitle in the right-eye RP by sequentially transmitting the RPCS segment in which the shift information is sequentially updated can be appropriately applied in a live mode.

In the syntax of "Case B," it is necessary to provide display on/off control in the receiving side as described below in the method of dynamically controlling the display positions of the left-eye subtitle in the left-eye RP and the right-eye subtitle in the right-eye RP. That is, the display on/off control is control for turning on (validate) display based on the shift information in the RPCS segment for any frame and turning off (invalidate) display based on the shift information in the RPCS segment for the previous frame.

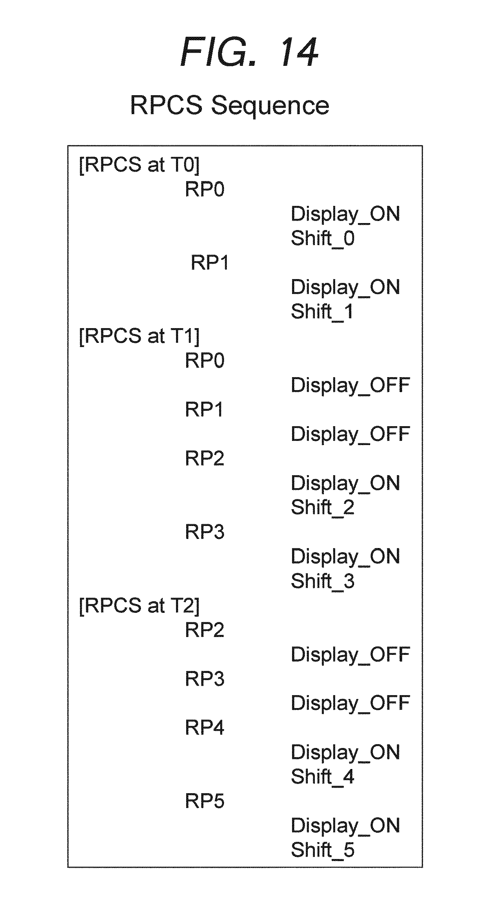

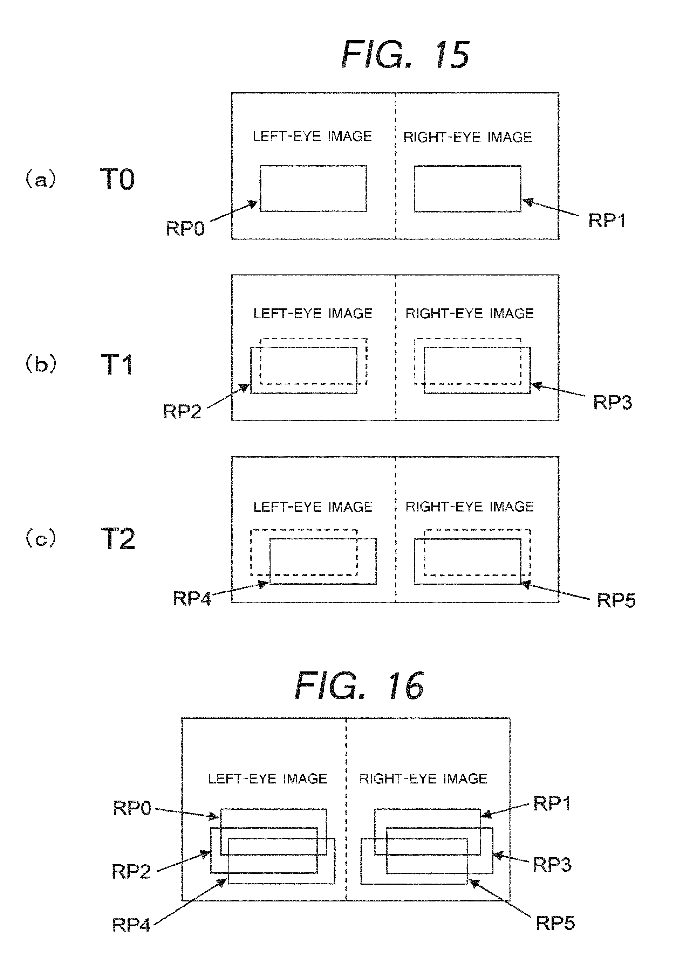

For display on/off control in the receiving side, although described in detail below, the RPCS segment includes command information for controlling on/off of the display. An example of display on/off control in the receiving side will be described with reference to Figs. 14 and 15.

Fig. 14 illustrates an example of RPCS segment sequentially transmitted to the receiving side. In this example, the RPCSs corresponding to each of the frames T0, T1, and T2 are sequentially transmitted. Fig. 15 illustrates an example in which the display positions of the left-eye subtitle in the left-eye RP and the right-eye subtitle in the right-eye RP are shifted using the RPCSs corresponding to each of the frames T0, T1, and T2.

As illustrated in Fig. 14, the RPCS of the frame T0 includes shift information (Shift_0) for obtaining a display position PR0 of the left-eye subtitle in the left-eye RP and command information (Display_ON) for turning on (validate) display of the display position PR0. In addition, the RPCS of the frame T0 includes shift information (Shift_1) for obtaining the display position PR1 of the right-eye subtitle in the right-eye RP and command information (Display_ON) for turning on (validate) display of the display position PR1.

For this reason, in the frame T0, as indicated by the solid-lined box of Fig. 15(a), the left-eye subtitle in the left-eye RP is displayed on (overlapped with) the display position PR0 on the left-eye image. In addition, in the frame T0, as indicated by the solid-lined box of Fig. 15(a), the right-eye subtitle in the right-eye RP is displayed on (overlapped with) the display position PP1 on the right-eye image.

As illustrated in Fig. 14, the RPCS of the frame T1 includes command information (Display_OFF) for turning off (invalidate) display of the display positions PR0 and PR1. In addition, the RPCS of the frame T1 includes shift information (Shift_2) for obtaining the display position PR2 of the subtitles in the left-eye RP and command information (Display_ON) for turning on (validate) display of the display position PR2. In addition, the RPCS of the frame T1 includes shift information (Shift_3) for obtaining the display position PR3 of the subtitles in the right-eye RP and command information (Display_ON) for turning on (validate) display of the display position PR3.

For this reason, in the frame T1, as indicated by the dotted-lined box of Fig. 15(b), the display of the display position PR0 on the left-eye image is turned off (invalidate), and the display of the display position PR1 on the right-eye image is turned off (invalidate). In the frame T1, as indicated by the solid-line box of Fig. 15(b), the left-eye subtitle in the left-eye RP is displayed on (overlapped with) the display position PR2 on the left-eye image. In the frame T1, as indicated by the solid-lined box of Fig. 15(b), the right-eye subtitle in the right-eye RP is displayed on (overlapped with) the display position PP3 on the right-eye image.

As illustrated in Fig. 14, the RPCS of the frame T2 includes command information (Display_OFF) for turning off (invalidate) display of the display positions PR2 and PR3. In addition, the RPCS of the frame T2 includes shift information (Shift_4) for obtaining the display position PR4 of the subtitles in the left-eye RP and the command information (Display_ON) for turning on (validate) display of the display position PR4. In addition, the RPCS of the frame T2 includes shift information (Shift_5) for obtaining the display position PR5 of the subtitles in the right-eye RP and command information (Display_ON) for turning on (validate) display of the display position PR5.

For this reason, in the frame T2, as indicated by the dotted-lined box of Fig. 15(c), the display of the display position PR2 on the left-eye image is turned off (invalidate), and the display of the display position PR3 on the right-eye image is turned off (invalidate). In the frame T2, as indicated by the solid-lined box of Fig. 15(c), the left-eye subtitle in the left-eye RP is displayed on (overlapped with) the display position PR4 on the left-eye image. In addition, in the frame T2, as indicated by the solid-lined box of Fig. 15(c), the right-eye subtitle in the right-eye RP is displayed on (overlapped with) the display position PP5 on the right-eye image.

Fig. 16 illustrates a display example of the left-eye subtitle and the right-eye subtitle in the receiving side, for example, when command information for controlling on/off of the display is not included in the RPCS segment. In this case, the subtitle in the left-eye RP is overlappingly displayed on (overlapped with) the display positions PR0, PR2, and PR4. In addition, the subtitle in the right-eye RP is overlappingly displayed on (overlapped with) the display positions PR1, PR3, and PR5. In this manner, the dynamic change of the display positions of the left-eye subtitle in the left-eye RP and the right-eye subtitle in the right-eye RP is not appropriately performed.

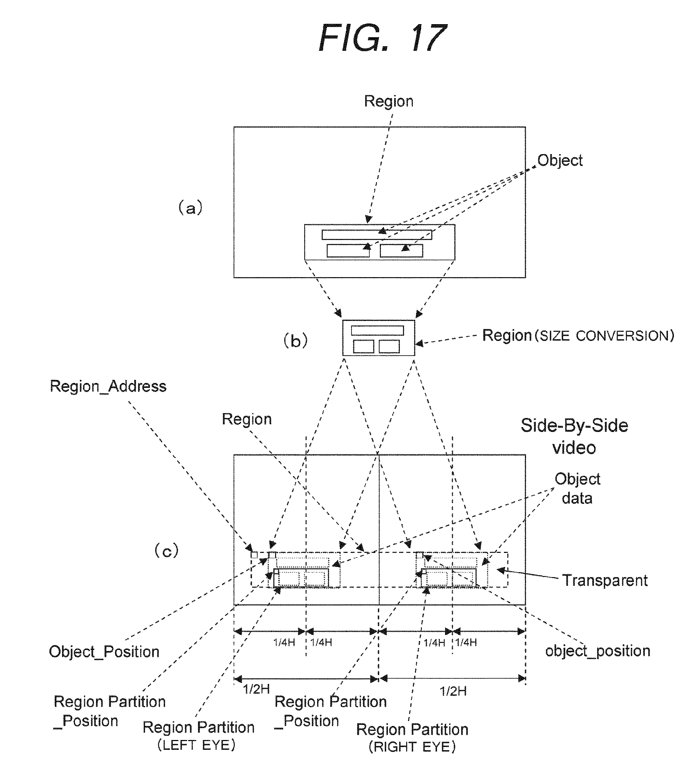

Fig. 17 conceptually illustrates a method of creating stereoscopic image subtitle data when the transmission format of the stereoscopic image data is the side-by-side format. Fig. 17(a) illustrates a region for the 2D image subtitle data. In this example, three objects are included in the region.

Initially, the subtitle processing unit 123 converts a size of the region for the 2D image subtitle data described above into a size appropriate to the side-by-side format as illustrated in Fig. 17(b) to generate bitmap data of that size.

Then, the subtitle processing unit 123 designates the bitmap data after the size conversion as an element of the region in the stereoscopic image subtitle data as illustrated in Fig. 17(c). That is, the bitmap data after the size conversion is designated as an object corresponding to the left-eye subtitle in the region and an object corresponding to the right-eye subtitle in the region.

The subtitle processing unit 123 converts the 2D image subtitle data into stereoscopic image subtitle data as described above and creates segments such as DDS, PCS, RCS, and ODS corresponding to the stereoscopic image subtitle data.

Then, the subtitle processing unit 123 sets the left-eye RP and the right-eye RP on the region of the stereoscopic image subtitle data based on user's manipulation or automatically as illustrated in Fig. 17(c). The left-eye RP is set as an area including a part of or the entire area of the object corresponding to the left-eye subtitle. The right-eye RP is set as an area including a part of or the entire area of the object corresponding to the right-eye subtitle. Fig. 17(c) illustrates a case where the left-eye RP and the right RP are set as an area including a part of the area of the obj ect.

The subtitle processing unit 123 creates the RPCS segment including shift information and area information of the left-eye RP and the right-eye RP set as described above. For example, the subtitle processing unit 123 creates the RPCS commonly including shift information and area information of the left-eye RP and right-eye RP or creates the RPCS segment individually including shift information and area information of the left-eye RP and the right-eye RP.

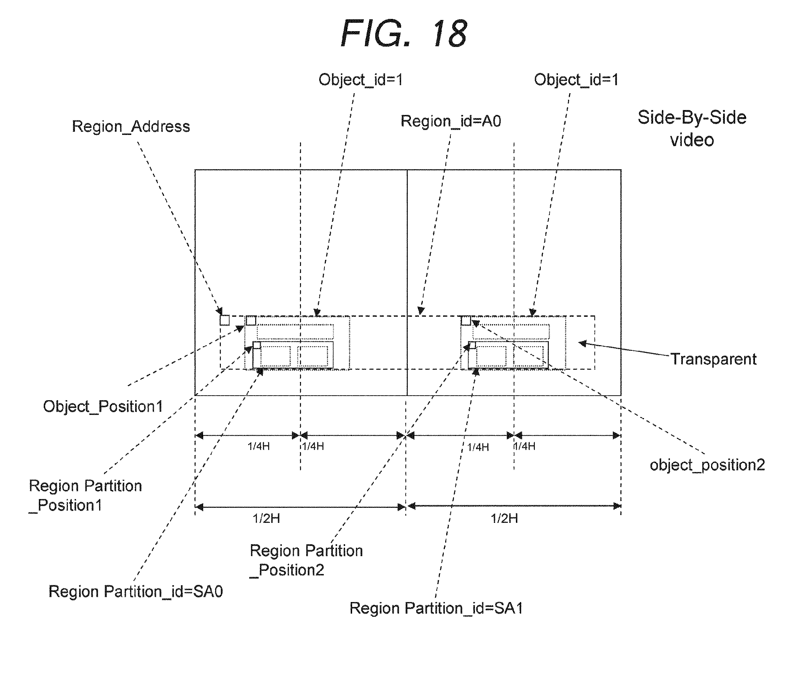

Fig. 18 illustrates an example of the region and the object for the stereoscopic image subtitle data created as described above. Here, the initial position of the region is set to "Region_address." In addition, for the object in the left-eye image (left view) side, the initial position is set to "Object_Position1," and "Object_id = 1." In addition, for the object in the right-eye image (right view) side, the initial position is set to "Object_Position2," and "Object_id = 1."

Fig. 18 illustrates an example of the left-eye RP and the right-eye RP set as described above. For the left-eye RP, the initial position is set to "Region Partition_position1," and "RegionPartition_id = SA0." For the right-eye RP, the initial position is set to "Region Partition_position2," and "Region Partition_id = SA1."

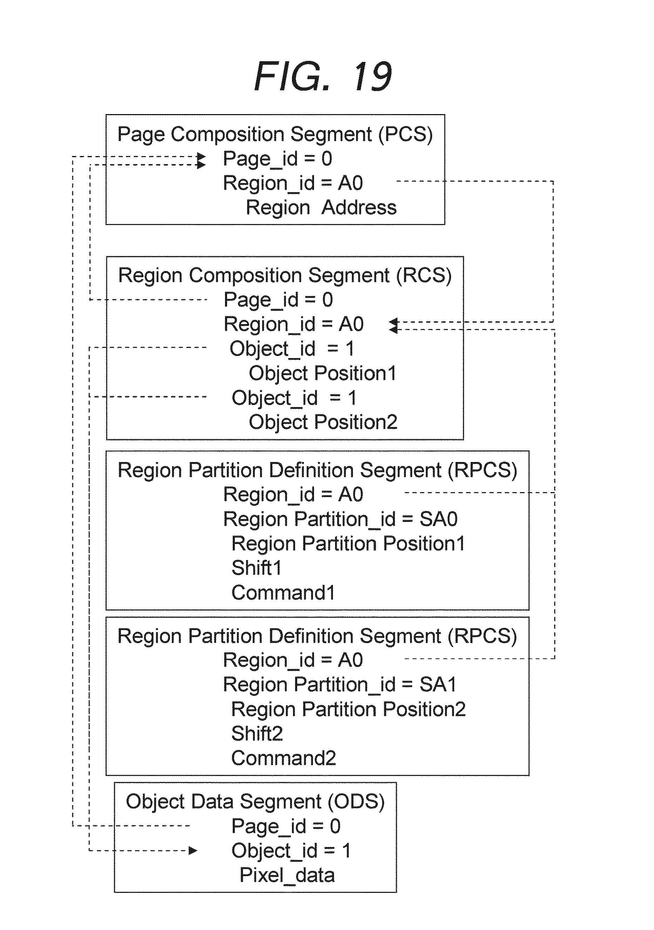

Fig. 19 illustrates an example (Example 1) for creating each segment of the stereoscopic image subtitle data when the transmission format of stereoscopic image data is the side-by-side format. In this example, the initial position (region_address) of the region (Region_id = 0A) is designated in the page composition segment (PCS). In addition, in the region composition segment (RCS) of the "Region_id = 0," the ODS of "Object_id = 1" is referenced. In addition, the initial position "object_position1" of the obj ect in the left-eye image side and the initial position "object_position2" of the object in the right-eye image side are designated in the RCS.

In this example, the region partition composition segments (RPCS) of the left-eye RP and the right-eye RP are separately created. The initial position (RegionPartition Position1) of the left-eye RP is designated in the RPCS of the left-eye RP of "RegionPartition_id = SA0." In addition, the RPCS of the left-eye RP includes shift information (Shift1) of the left-eye RP and command information (Command1) for display on/off. In addition, the initial position (Region Partition Position2) of the right-eye RP is designated in the RPCS of the right-eye RP of "Region Partition_id = SA1." In addition, the RPCS of the right-eye RP includes shift information (Shift2) of the right-eye RP and command information (Command2) for display on/off.

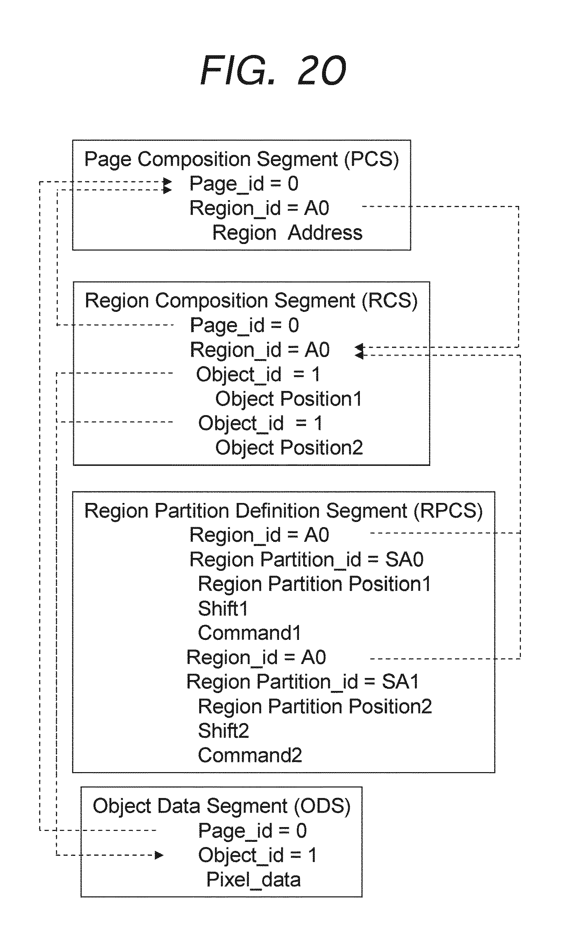

Fig. 20 illustrates another example (Example 2) for creating each segment of the stereoscopic image subtitle data when the transmission format of stereoscopic image data is the side-by-side format. In this example, similar to the example of Fig. 19 (Example 1), segments such as PCS, RCS, and ODS are created. In this example, the RPCSs of the left-eye RP and the right-eye RP are commonly created. That is, the common RPCS includes various types of information of the left-eye RP and the right-eye RP.

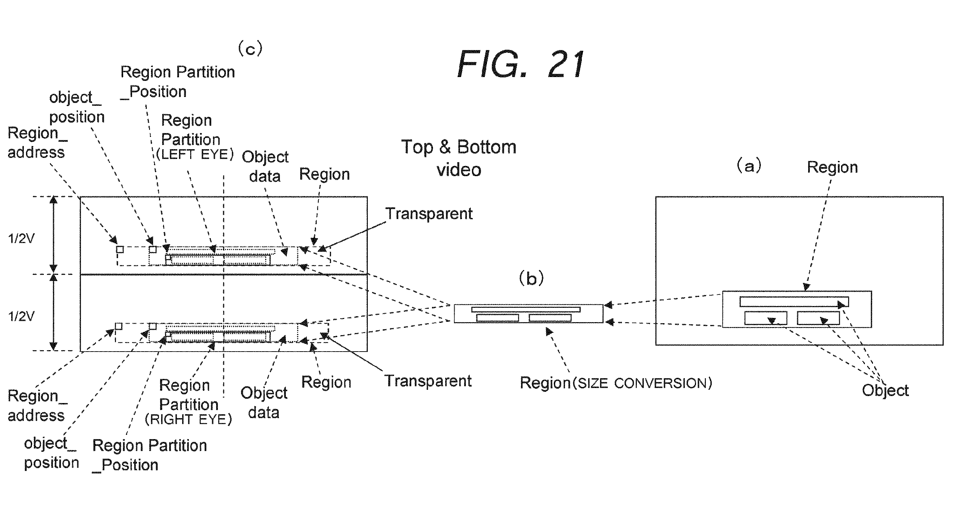

Fig. 21 conceptually illustrates a method of creating the stereoscopic image subtitle data when the transmission format of stereoscopic image data is the top-and-bottom format. Fig. 21(a) illustrates a region for the 2D image subtitle data. In this example, the region includes three objects.

Initially, the subtitle processing unit 123 converts a size of the region for the 2D image subtitle data described above into a size appropriate to the top-and-bottom format as illustrated in Fig. 21(b) to generate bitmap data of that size.

Then, the subtitle processing unit 123 designates the bitmap data after the size conversion as an element of the region of the stereoscopic image subtitle data as illustrated in Fig. 21(c). That is, the bitmap data after the size conversion is designated as an object of the region in the left-eye image (left view) side and an object of the region in the right-eye image (right view) side.

The subtitle processing unit 123 converts the 2D image subtitle data into the stereoscopic image subtitle data as described above and creates segments such as PCS, RCS, and ODS corresponding to the stereoscopic image subtitle data.

Then, the subtitle processing unit 123 sets the left-eye RP and the right-eye RP on the area of the region in the stereoscopic image subtitle data based on user's manipulation or automatically as illustrated in Fig. 21(c). The left-eye RP is set as an area including a part of or the entire area of the object in the region in the left-eye image side. The right-eye RP is set as an area including a part of or the entire area of the object in the region on the left-eye image side. Fig. 21(c) illustrates a case where the left-eye RP and the right RP are set as the area including a part of the area of the obj ect.

The subtitle processing unit 123 creates RPCS segment including shift information and area information of the left-eye RP and the right-eye RP set as described above. For example, the subtitle processing unit 123 creates the RPCS commonly including shift information and area information of the left-eye RP and the right-eye RP or creates the RPCS segment individually including shift information and area information of the left-eye RP and the right-eye RP.

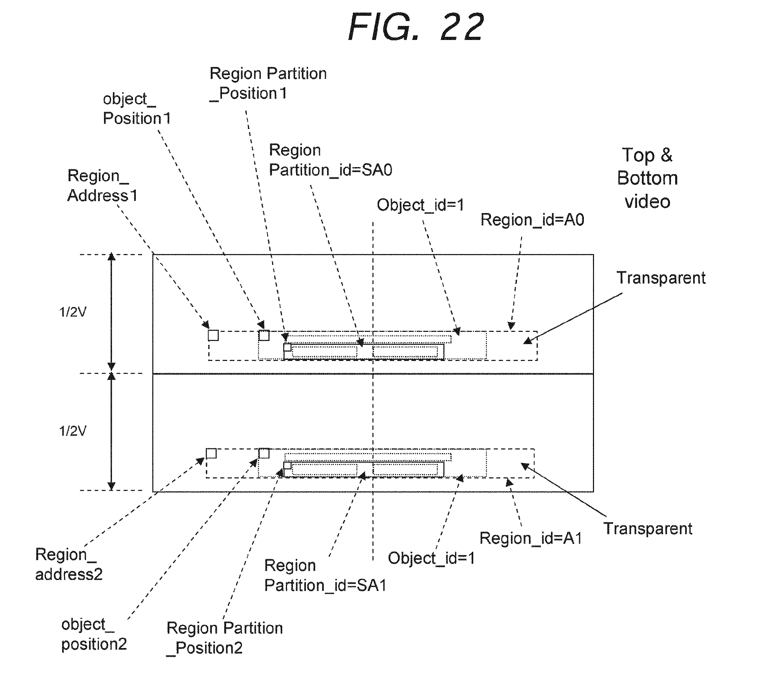

Fig. 22 illustrates an example of the object and the region for the stereoscopic image subtitle data created as described above. Here, the initial position of the region in the left-eye image (left view) side is set to "Region_address1," and the initial position of the region in the right-eye image (right view) side is set to "Region_address2." In addition, for the object in the left-eye image side, the initial position is set to "Object_Position1," and "Object_id = 1." In addition, for the object in the right-eye image side, the initial position is set to "Object_Position2," and "Objected = 1."

Fig. 22 illustrates an example of the left-eye RP and the right-eye RP set as described above. For the left-eye RP, the initial position is set to "Region Partition_position1," and "RegionPartition_id = SA0." For the right-eye RP, the initial position is set to "RegionPartition_position2," and "Region Partition_id = SA1."

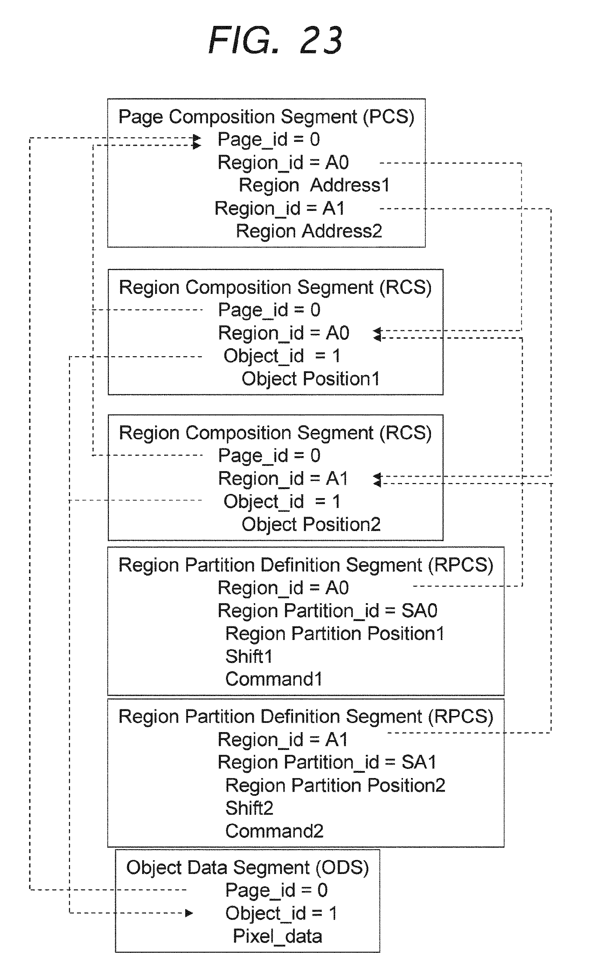

Fig. 23 illustrates an example (Example 1) for creating each segment of the stereoscopic image subtitle data when the transmission format of stereoscopic image data is the top-and-bottom format. In this example, the initial position (region_address1) of the region (Region_id = 0A) in the left-eye image (left view) side is designated in the page composition segment (PCS). In addition, in this example, the initial position (region_address2) of the region (Region_id = 0A) in the right-eye image (right view) side is designated in the page composition segment (PCS). In the region composition segment (RCS) of "Region_id = A0," the ODS of "Object_id = 1" is referenced, and initial position "object_position1" of that object is designated. In addition, in the RCS of "Region_id = A1," the ODS of "Object_id = 1" is referenced, and the initial position "object_position2" of that object is designated.

In this example, the region partition composition segments (RPCS) of the left-eye RP and the right-eye RP are separately created. In the RPCS of the left-eye RP of "RegionPartition_id = SA0," the initial position (RegionPartition Position1) of the left-eye RP is designated. In addition, the RPCS of the left-eye RP includes shift information (Shift1) of the left-eye RP and command information (Command1) of display on/off. In addition, in the RPCS of the right-eye RP of "Region Partition_id = SA1," the initial position (Region Partition Position2) of the right-eye RP is designated. In addition, the RPCS of the right-eye RP includes shift information (Shift2) of the right-eye RP and command information (Command2) of display on/off.

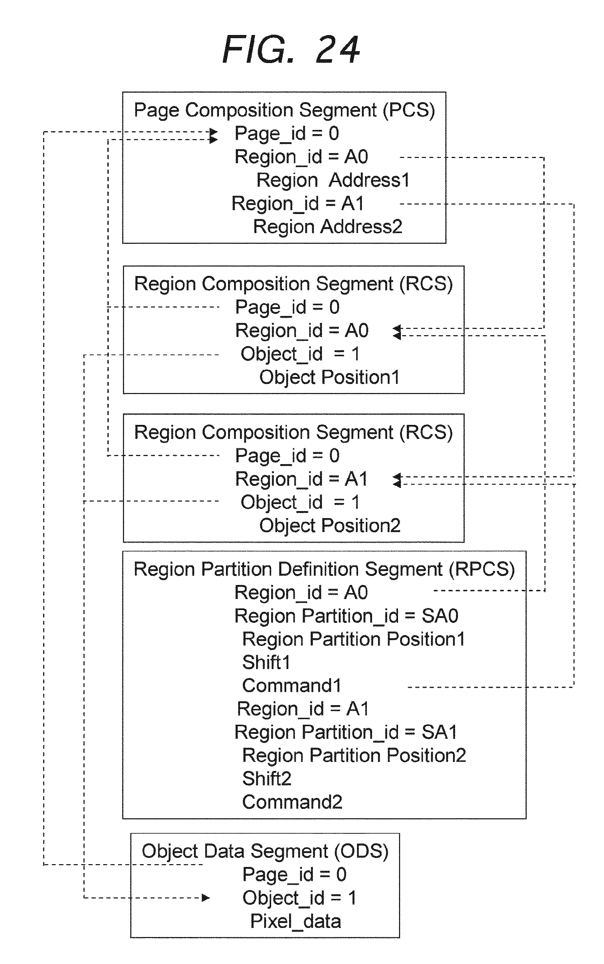

Fig. 24 illustrates another example (Example 2) for creating each segment of the stereoscopic image subtitle data when the transmission format of stereoscopic image data is the top-and-bottom format. In this example, similar to the example (Example 1) illustrated in Fig. 23, segments such as PCS, RCS, and ODS are created. In this example, the RPCSs of the left-eye RP and the right-eye RP are commonly created. That is, common RPCS includes various types of information of the left-eye RP and the right-eye RP.

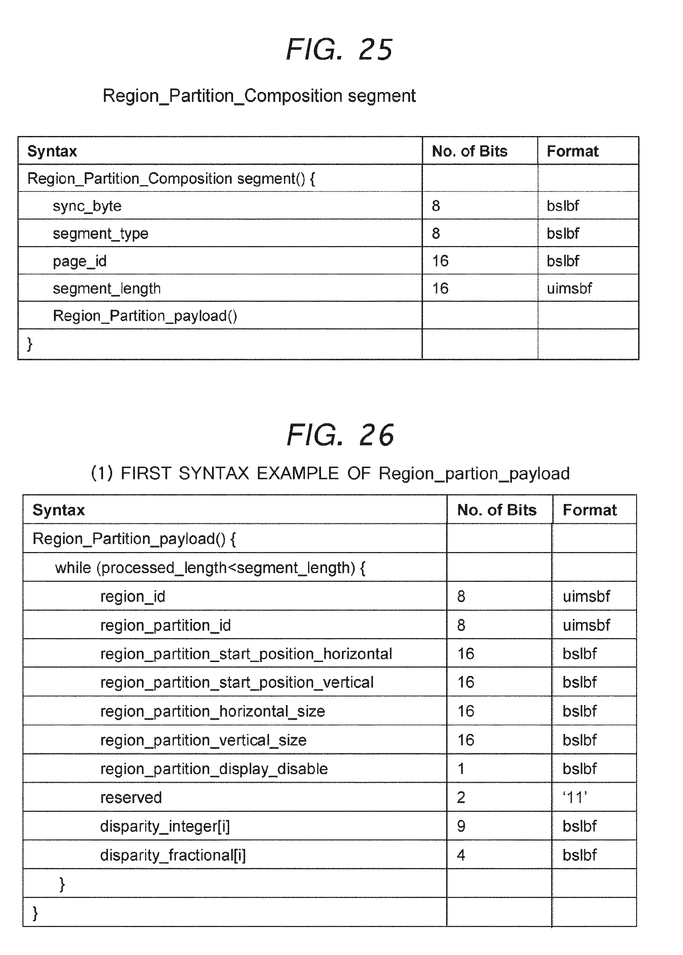

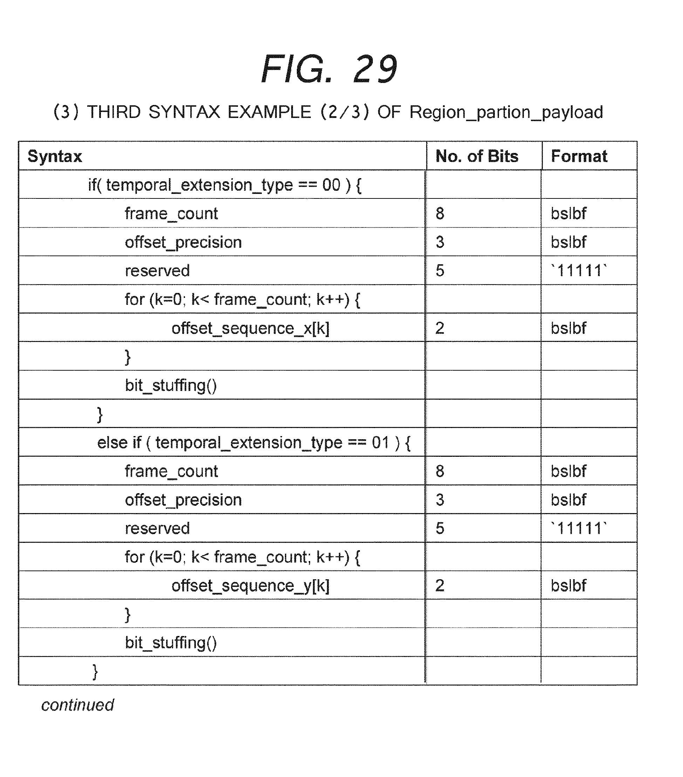

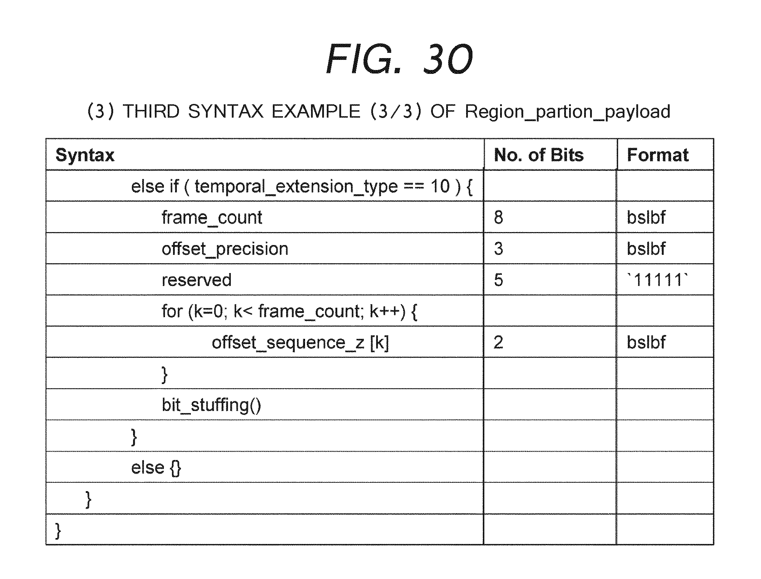

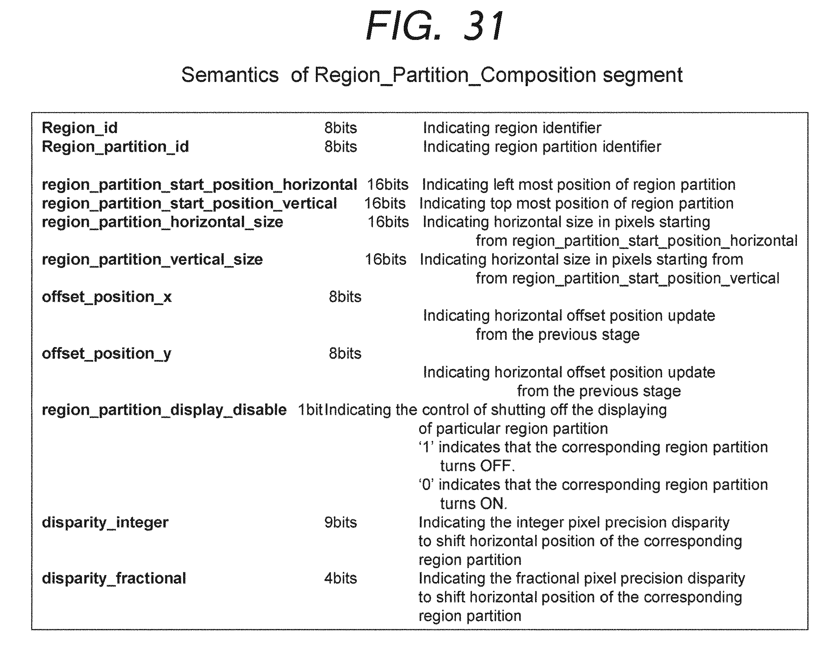

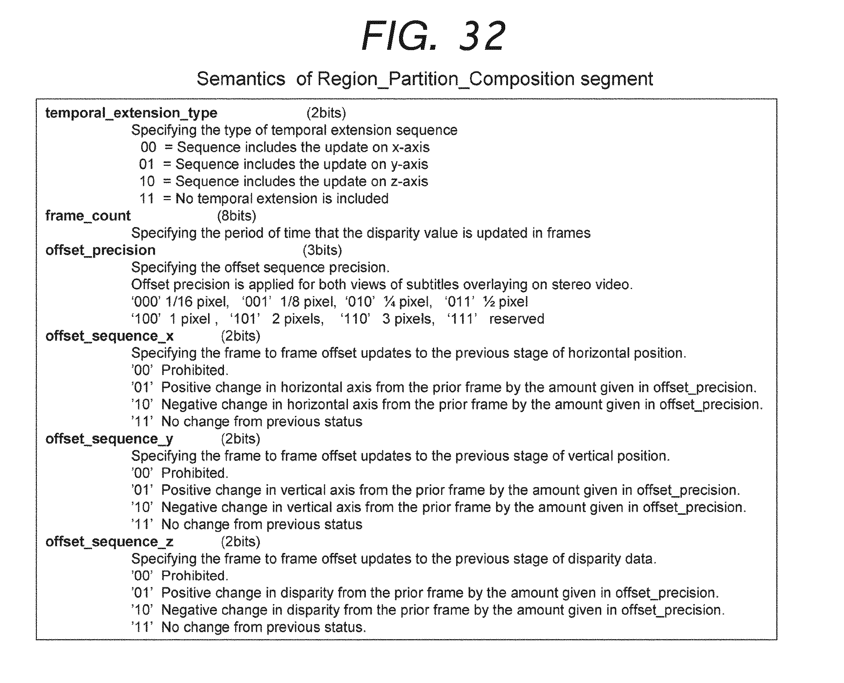

Figs. 25 to 30 illustrate exemplary syntax of the region partition composition segment (RPCS). Figs. 31 and 32 illustrate principal semantics of data of the RPCS. This syntax includes various types of information such as "Sync_byte," "segment_type," "page_id," "segment_length," and "Region_Partition_payload()." The "segment_type" is 8-bit data representing a segment type and is set to "0x49" indicating the RPCS here. The "segment_length" is 8-bit data representing a length (size) of the segment. This data represents a length (number of bites) of "Region_Partition_payload()" thereafter. "Region_Partition_payload()" is a part including substantial information of the RPCS.

Fig. 26 illustrates a first syntax example of "Region_Partition_payload()." In the first syntax example, area information of the left-eye RP and the right-eye RP, disparity information assigned to the display positions of the left-eye RP and the right-eye RP, and command information for controlling display on/off can be transmitted. This "Region_Partition_payload()" may have a length indicated by "segment_type" as described above and any number of pieces of region partition information. This is similarly applied to the second and third syntax examples described below.

"region_id" is 8-bit information representing an identifier of the region. "region_partition_id" is 8-bit information representing an identifier of the region partition. "region_partition_start_position_horizontal" is 16-bit information representing a left-end position of the region partition which is a rectangular area. "region_partition_start_position_vertical" is 16-bit information representing an upper-end position of the region partition which is a rectangular area.

"region_partition_horizontal_size" is 16-bit information representing a horizontal size (number of pixels) of the region partition which is a rectangular area. "region_partition_vertical_size" is 16-bit information representing a vertical size (number of pixels) of the region partition which is a rectangular area. Such positional information and size information serve as area information of the region partition.

"region_partition_display_disable" is 1-bit flag information (command information) for controlling on/off of display (overlapping) of the corresponding region partition. "region_partition_display_disable = 1" represents turning-off (invalidate) of display, and "region_partition_display_disable = 0" represents turning-on (validate) of display.

"disparity_integer" is 9-bit information representing an integer pixel precision portion (integer number portion) out of the disparity information for shifting the corresponding region partition in a horizontal direction. This 9-bit information is a signed integer value. "disparity_fractional" is 4-bit information representing a sub-pixel precision portion (decimal number portion) out of disparity information for shifting the corresponding region partition in a horizontal direction. Due to this 4-bit information, the disparity information can be represented with a sub-pixel precision level up to 1/16. Here, the disparity information serves as shift information for assigning disparity to the display positions of the left-eye subtitle in the left-eye RP and the right-eye subtitle of the right-eye RP as described above.

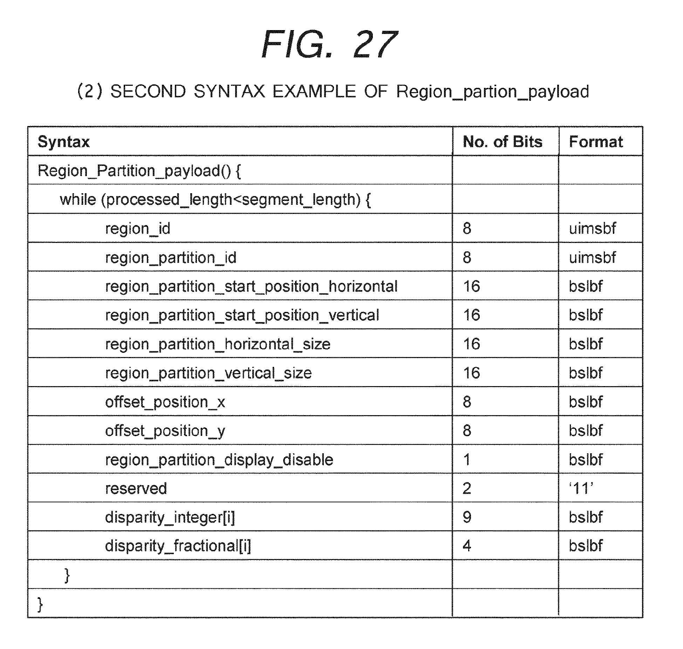

Fig. 27 illustrates a second syntax example of "Region_Partition_payload()." In the second syntax example, update information of the display position (x, y) can be transmitted along with the area information of the left-eye RP and the right-eye RP, information on disparity assigned to the display positions of the left-eye RP and the right-eye RP, and command information for controlling display on/off. "offset_position_x" is 8-bit offset information representing update information in a horizontal direction of the display positions of the left-eye subtitle in the left-eye RP and the right-eye subtitle in the right-eye RP from the previous stage. "offset_position_y" is 8-bit offset information representing update information in a vertical direction of the display positions of the left-eye subtitle in the left-eye RP and the right-eye subtitle in the right-eye RP from the previous stage. Here, this movement information (offset information) serves as shift information for equally moving the display positions of the left-eye subtitle in the left-eye RP and the right-eye subtitle in the right-eye RP as described above.

Although detailed description will not be provided, the second syntax example is similar to the first syntax example of Fig. 26 in other contents.

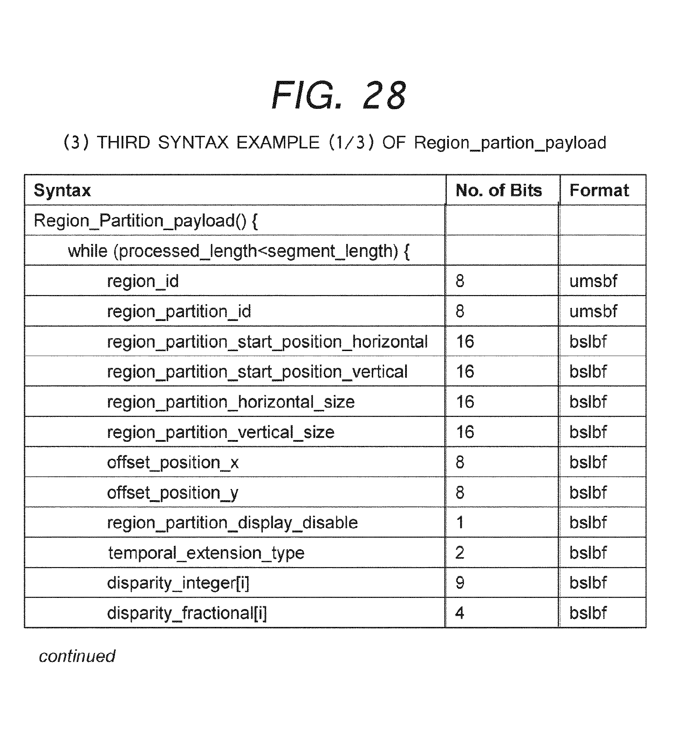

Figs. 28 to 30 illustrate a third syntax example of "Region_Partition_payload()." In the third syntax example, the area information of the left-eye RP and the right-eye RP, information on disparity assigned to the display positions of the left-eye RP and the right-eye RP, and command information for controlling display on/off can be transmitted. In addition, in the third syntax example, update information of the display position (x, y), disparity information, and update information of the display positions of each frame can be transmitted.

"temporal_extension_type" is 2-bit information representing whether or not disparity information and update information of the display position for each frame are included. "temporal_extension_type = 00" represents that update information of the x-axis (horizontal direction of the display position) is included. "temporal_extension_type =01" represents that update information of the y-axis (vertical direction of the display position) is included. "temporal_extension_type = 10" represents that the update information of the z-axis (disparity information) is included. "frame_count" represents the number of frames in which disparity information and the like are updated during a frame period for displaying the subtitle.

"offset_sequence" is 2-bit information as offset information for the disparity information and the like of the previous frame. "offset_sequence = 01" represents that the offset value is set to "+1." "offset_sequence = 10" represents that the offset value is set to "-1." In addition, "offset_sequence = 11" represents that the offset value is not changed from the previous frame. This "offset_sequence" serves as shift information group described above.

"offset_precision" is 3-bit information representing that the offset value indicated by the "offset_sequence" described above has precision of "1," that is, the number of pixels is set to "1." If "offset_precision = 000," "1" of the offset value represents 1/16 pixels. In addition, if "offset_precision = 001," "1" of the offset value represents 1/8 pixels. In addition, if "offset_precision = 010," "1" of the offset value represents 1/4 pixels.

If "offset_precision = 011," "1" of the offset value represents 1/2 pixels. If "offset_precision = 100," "1" of the offset value represents a single pixel. If "offset_precision = 101," "1" of the offset value represents 2 pixels. If "offset_precision = 110," "1" of the offset value represents three pixels.

Although detailed descriptions are not provided, the third syntax example is similar to the first syntax example of Fig. 26 and the second syntax example of Fig. 27 in other contents.

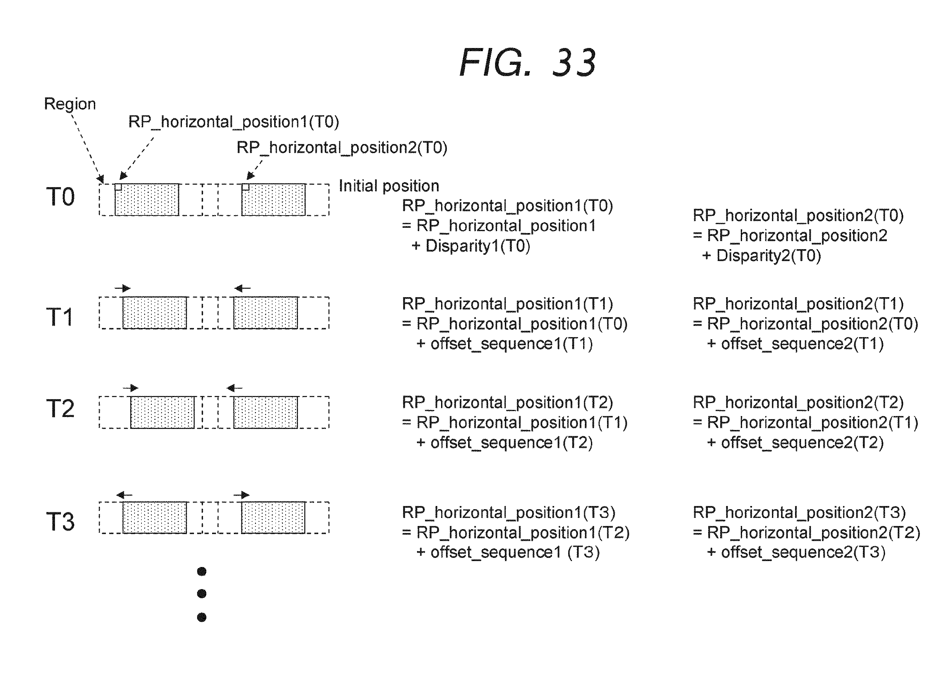

Fig. 33 illustrates an example for updating disparity assigned to the display positions of the left-eye subtitle in the left-eye RP and the right-eye subtitle in the right-eye RP on a frame basis in the receiving side when the transmission format of stereoscopic image data is the side-by-side format. In this example, updating is performed based on the shift information group of the x-axis inserted into the RPCS, that is, the disparity information group.

The display positions of the left-eye subtitle in the left-eye RP and the right-eye subtitle of the right-eye RP in the initial frame T0 are set as follows. In addition, it is assumed that the initial position of the left-eye RP is set to "RP_horizontal_position1," and the initial position of the right-eye RP is set to "RP_horizontal_position2." In addition, it is assumed that the disparity information of the frame T0 included in the PPCS is set to "Disparityl(T0)" and "Disparity2(T0)." The initial position "RP_horizontal_position1(T0)" for displaying the left-eye subtitle in the left-eye RP is set to "R-P-horizontal_positionl + Disparity 1 (T0)." In addition, the initial position "RP_horizontal_position2(T0)" for displaying the right-eye subtitle in the right-eye RP is set to "RP_horizontal_position2 + Disparity2(T0)."

The display positions of the left-eye subtitle in the left-eye RP and the right-eye subtitle in the right-eye RP of the frame T1 which is a next frame are updated as follows. The offset value of the frame T1 is set to "offset_sequencel(T1)" and "offset_sequence2(T1)." The initial position "RP_horizontal_position1(T1)" for displaying the left-eye subtitle in the left-eye RP is set to "RP_horizontal_positionl(T0) + offset_sequencel(T1)." In addition, the initial position "RP_horizontal_position2(T1)" for displaying the right-eye subtitle in the right-eye RP is set to "RP_horizontal_position2(T0) + offset_sequence2(T1)."

The display positions of the left-eye subtitle in the left-eye RP and the right-eye subtitle in the right-eye RP of the frame T2 as a next frame are updated as follows. The offset value of the frame T2 is set to "offset_sequence1(T2)" and "offset_sequence2(T2)." The initial position "RP_horizontal_position1(T2)" for displaying the left-eye subtitle in the left-eye RP is set to "RP_horizontal_positionl(T1) + offset_sequence1(T2)." The initial position "RP_horizontal_position2(T2)" for displaying the right-eye subtitle in the right-eye RP is set to "RP_horizontal_position2(T1) + offset_sequence2(T2)."

Hereinafter, similarly, in the receiving side, the display positions of the left-eye subtitle in the left-eye RP and the right-eye subtitle in the right-eye RP in each frame are sequentially updated based on the disparity information group of the left-eye RP and the right-eye RP inserted into the RPCS.

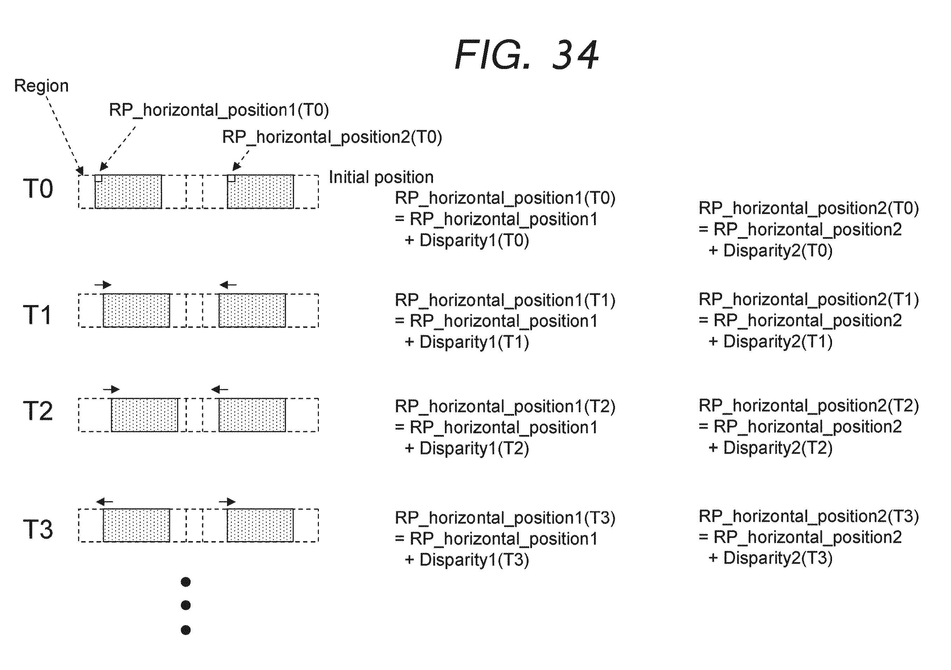

Fig. 34 illustrates an example for updating the disparity assigned to the display positions of the left-eye subtitle in the left-eye RP and the right-eye subtitle in the right-eye RP on a frame basis in the receiving side when the transmission format of stereoscopic image data is the side-by-side format. In this example, updating is performed based on the disparity information included in the RPCS transmitted in response to each frame.

The display positions of the left-eye subtitle in the left-eye RP and the right-eye subtitle in the right-eye RP for the initial frame T0 are set as follows. In addition, the initial position of the left-eye RP is set to "RP_horizontal_position1," and the initial position of the right-eye RP is set to "RP_horizontal_position2." In addition, the disparity information of PPCS of the frame T0 is set to "Disparity 1(T0)" and "Disparity2(T0)." The initial position "R-P_horizontal_positionl(T0)" for displaying the left-eye subtitle in the left-eye RP is set to "RP_horizontal_position1 + Disparity1(T0)." In addition, the initial position "RP_horizontal_position2(T0)" for displaying the right-eye subtitle in the right-eye RP is set to "RP_horizontal_position2 + Disparity2(T0)."

The display positions of the left-eye subtitle in the left-eye RP and the right-eye subtitle in the right-eye RP of the frame T1 as a next frame are updated as follows. In addition, the disparity information of the PPCS of the frame T1 is set to "Disparityl(T1)" and "Disparity2(T1)." The initial position "RP_horizontal_position1(T1)" for displaying the left-eye subtitle in the left-eye RP is set to "RP_horizontal_position1 + Disparity1(T1)." In addition, the initial position "RP_horizontal_position2(T1)" for displaying the right-eye subtitle in the right-eye RP is set to "RP_horizontal_position2 + Disparity2(T1)."

Hereinafter, similarly, in the receiving side, the display positions of the left-eye subtitle in the left-eye RP and the right-eye subtitle in the right-eye RP of each frame are sequentially updated based on disparity information of the left-eye RP and the right-eye RP included in the RPCS of each frame.

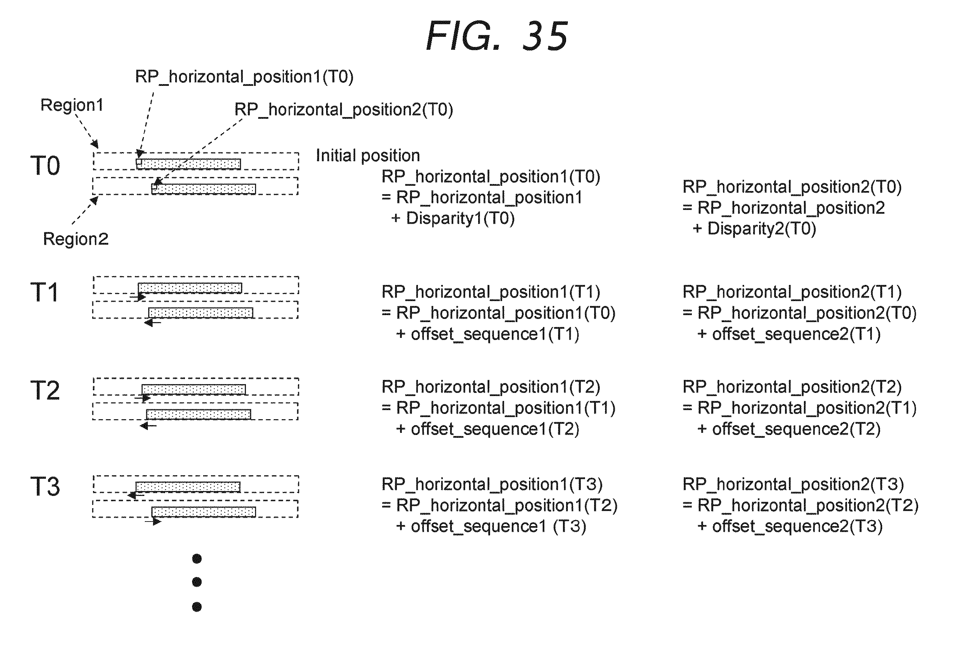

Fig. 35 illustrates an example for updating disparity assigned to the display positions of the left-eye subtitle in the left-eye RP and the right-eye subtitle in the right-eye RP on a frame basis in the receiving side when the transmission format of stereoscopic image data is the top-and-bottom format. In this example, updating is performed based on the shift information group of the x-axis inserted into the RPCS, that is, the disparity information group. In addition, the updating method is similar to that of a case where the transmission format of stereoscopic image data described above is the side-by-side format (refer to Fig. 33), and a detailed description thereof will not be repeated.

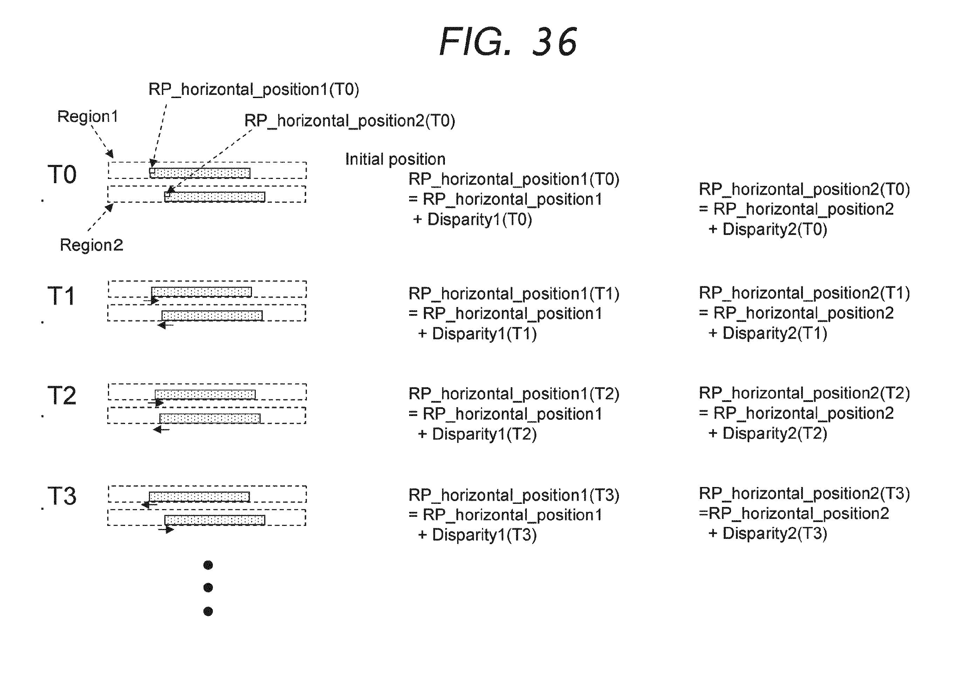

Fig. 36 illustrates an example for updating disparity assigned to the display positions of the left-eye subtitle in the left-eye RP and the right-eye subtitle in the right-eye RP on a frame basis in the receiving side when the transmission format of stereoscopic image data is a top-and-bottom format. In this example, updating is performed based on the disparity information included in the RPCS transmitted in response to each frame. In addition, the updating method is similar to that of a case where the transmission format of stereoscopic image data is the side-by-side format (refer to Fig. 34), and a detailed description thereof will not be repeated.

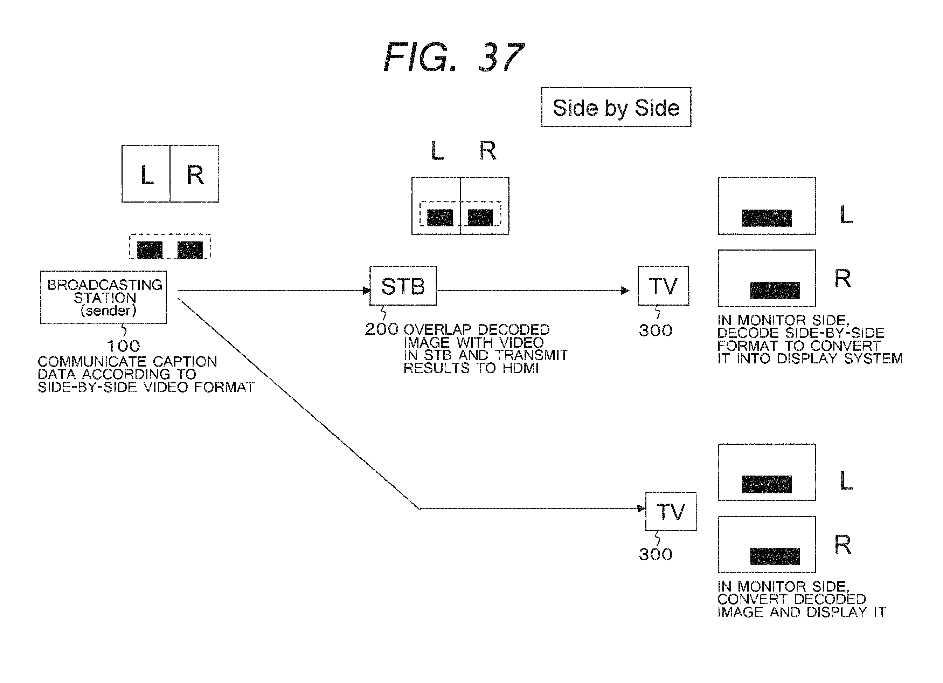

Fig. 37 schematically illustrates a flow of the stereoscopic image data and the subtitle data from the broadcasting station 100 through the set-top box 200 to the television receiver 300. In this case, the broadcasting station 100 generates stereoscopic image subtitle data (also including display control information) conforming to the side-by-side format. In addition, the stereoscopic image data is included in the video data stream for transmission, and the stereoscopic image subtitle data is included in subtitle data stream for transmission.

The set-top box 200 generates display data for displaying the left-eye subtitle and the right-eye subtitle based on the subtitle data, and this display data is overlapped with the stereoscopic image data. In this case, the display (overlapping) positions of the left-eye subtitle in the left-eye RP and the right-eye subtitle in the right-eye RP are shift-adjusted based on the shift information (disparity information and movement information of the display positions) included in the display control information.

The stereoscopic image data where the display data of the subtitle is overlapped is transmitted to the television receiver 300 via a HDMI digital interface. In this case, the transmission format of stereoscopic image data from the set-top box 200 to the television receiver 300 is the side-by-side format.

In the television receiver 300, decoding process is performed for the stereoscopic image data transmitted from the set-top box 200. In addition, data of the left-eye image and the right-eye image where the subtitles are overlapped is generated, and a binocular disparity image (including the left-eye image and the right-eye image) for causing a user to recognize the stereoscopic image is displayed on a display panel such as LCD. As illustrated in Fig. 37, a path directly traveling to the television receiver 300 from the broadcasting station 100 may be considered. In this case, the television receiver 300 includes the same processing function unit as the set-top box 200.

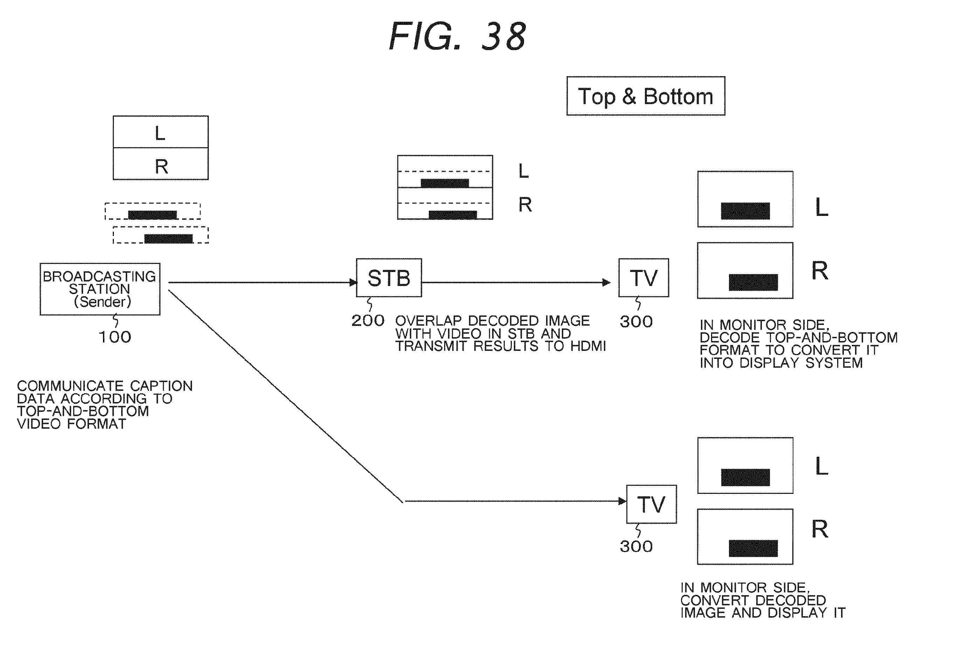

Fig. 38 schematically illustrates a flow of the stereoscopic image data and the subtitle data from the broadcasting station 100 through the set-top box 200 to the television receiver 300. In this case, the broadcasting station 100 generates stereoscopic image subtitle data (including display control information) conforming to the top-and-bottom format. In addition, the stereoscopic image data is included in the video data stream for transmission, and the stereoscopic image subtitle data is included in the subtitle data stream for transmission.

In the set-top box 200, the display data for displaying the left-eye subtitle and the right-eye subtitle is generated based on subtitle data, and the display data is overlapped with the stereoscopic image data. In this case, the display (overlapping) positions of the left-eye subtitle in the left-eye RP and the right-eye subtitle in the right-eye RP are shift-adjusted based on the shift information (disparity information and movement information of the display positions) included in the display control information. In addition, the stereoscopic image data where the display data of the subtitle is overlapped is transmitted to the television receiver 300 via a HDMI digital interface. In this case, the transmission format of stereoscopic image data from the set-top box 200 to the television receiver 300 is the top-and-bottom format.

In the television receiver 300, a decoding process is performed for the stereoscopic image data transmitted from the set-top box 200. In addition, data of the left-eye image and the right-eye image where the subtitle is overlapped is generated, and a binocular display image (including the left-eye image and the right-eye image) for causing a user to recognize the stereoscopic image is displayed on a display panel such as LCD. Even in this case, as illustrated in Fig. 38, similar to the "Case E (side-by-side format)" described above, a path directly traveling from the broadcasting station 100 to the television receiver 300 may be considered. In this case, the television receiver 300 includes the same processing function unit as the set-top box 200.

In the transmission data generating unit 110 illustrated in Fig. 2, the bit stream data BSD output from the multiplexer 122 includes a multiplexed data stream having a video data stream and a subtitle data stream. The video data stream includes stereoscopic image data. In addition, the subtitle data stream includes stereoscopic image (3D image) subtitle data conforming to the transmission format of stereoscopic image data.

The stereoscopic image subtitle data includes data of the left-eye subtitle and data of the right-eye subtitle. For this reason, in the receiving side, it is possible to easily generate display data of the left-eye subtitle overlapped with the left-eye image data included in the stereoscopic image data and display data of the right-eye subtitle overlapped with the right-eye image data included in the stereoscopic image data based on this subtitle data. As a result, it is possible to facilitate the processing.

In the transmission data generating unit 110 illustrated in Fig. 2, the bit stream data BSD output from the multiplexer 122 includes display control information in addition to the stereoscopic image data and the stereoscopic image subtitle data. This display control information includes area information of the left-eye RP and the right-eye RP and shift information of the display positions of the left-eye subtitle in the left-eye RP and the right-eye subtitle in the right-eye RP. For this reason, in the receiving side, it is possible to perform shift-adjustment based on the shift information of the display data of the left-eye subtitle and the right-eye subtitle such that the display positions of the left-eye subtitle in the left-eye RP and the right-eye subtitle in the right-eye RP are shifted.

For this reason, if the shift information is shift information (disparity information) for assigning disparity to the display positions of the left-eye subtitle in the left-eye RP and the right-eye subtitle in the right-eye RP, the following effect can be obtained. That is, in the receiving side, it is possible to maintain optimal conformity of the depth perception between objects in the image for a part of or the entire subtitle (caption). In addition, if the shift information is shift information (movement information of the display position) for equally moving the display positions of the left-eye subtitle in the left-eye RP and the right-eye subtitle in the right-eye RP, the following effect can be obtained. That is, in the receiving side, it is possible to move the display positions for a part of or the entire subtitle (caption).

In the transmission data generating unit 110 of Fig. 2, the subtitle processing unit 123 can sequentially generate and transmit the RPCS segments corresponding to each frame of the subtitle display period. For this reason, in the receiving side, it is possible to shift the display positions of the left-eye subtitle in the left-eye RP and the right-eye subtitle in the right-eye RP using the display control information (shift information) sequentially updated in each frame of the subtitle display period. For this reason, it is possible to dynamically change disparity assigned to a part of or the entire subtitle (caption) in synchronization of the change of the image contents. In addition, it is possible to obtain a display effect for dynamically changing the display positions of a part of or the entire subtitle (caption).

In the transmission data generating unit 110 illustrated in Fig. 2, the shift information (such as disparity information) included in the RPCS segment created by the subtitle processing unit 123 has a sub-pixel precision level. For this reason, in the receiving side, it is possible to smoothly perform a shift operation and thus improve image quality if the display positions of the left-eye subtitle in the left-eye RP and the right-eye subtitle in the right-eye RP are shift-adjusted using the shift information sequentially updated for each frame of the subtitle display period.

### [Description of Set-top Box]

Returning to Fig. 1, the set-top box 200 receives the bit stream data (transport stream) BSD transmitted from the broadcasting station 100 through airwaves. The bit stream data BSD includes stereoscopic image data and audio data including the left-eye image data and the right-eye image data. In addition, the bit stream data BSD includes stereoscopic image subtitle data (including display control information) for displaying the subtitle (caption).

The set-top box 200 has a bit stream processing unit 201. The bit stream processing unit 201 extracts stereoscopic image data, audio data, and subtitle data from the bit stream data BSD. In addition, the bit stream processing unit 201 generates stereoscopic image data where the subtitle is overlapped using the stereoscopic image data, the subtitle data, and the like.

In this case, it is assumed that disparity is assigned between the left-eye subtitle overlapped with the left-eye image and the right-eye subtitle overlapped with the right-eye image. For example, as described above, the stereoscopic image subtitle data transmitted from the broadcasting station 100 includes shift information as the disparity information, and disparity is assigned between the left-eye subtitle and the right-eye subtitle based on the shift information. In this manner, since disparity is assigned between the left-eye subtitle and the right-eye subtitle, a user is allowed to recognize the subtitle (caption) above the image.

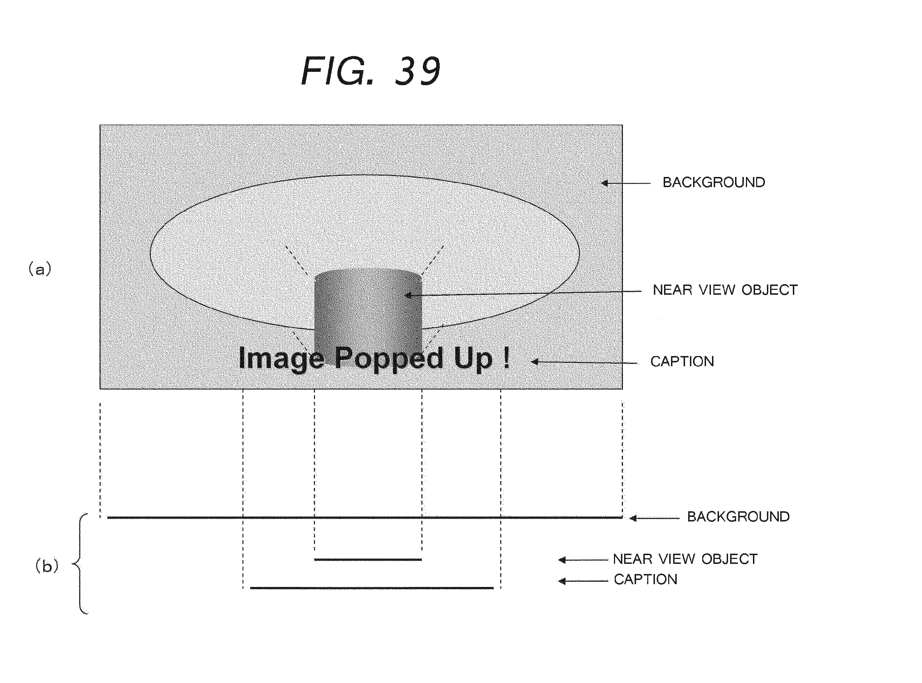

Fig. 39(a) illustrates an example for displaying the subtitle (caption) on an image. In this example, the caption is overlapped on an image including a background, an object of a near view, and the like. Fig. 39(b) illustrates depth perception of a background, an object of a near view, and a caption, in which the caption is recognized at the most frontend.

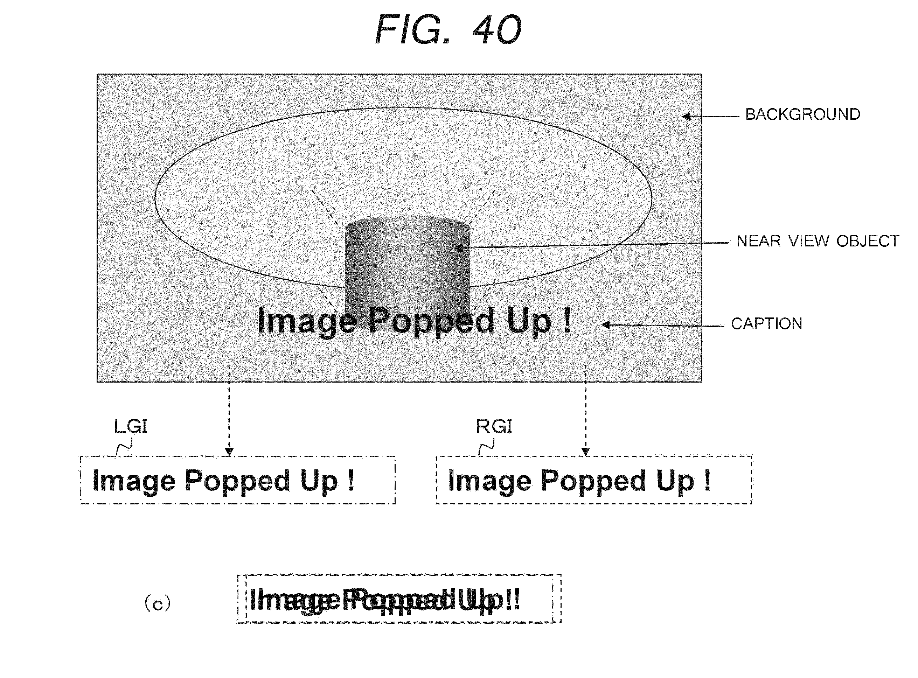

Fig. 40(a) illustrates an example for displaying the subtitle (caption) on an image similar to that of Fig. 39(a). Fig. 40(b) illustrates a left-eye caption LGI overlapped with the left-eye image and a right-eye caption RGI overlapped with the right-eye image. Fig. 40(c) illustrates that disparity is given between the left-eye caption LGI and the right-eye caption RGI in order to cause the caption to be recognized at the most frontend.

### [Configuration Example of Set-top Box]

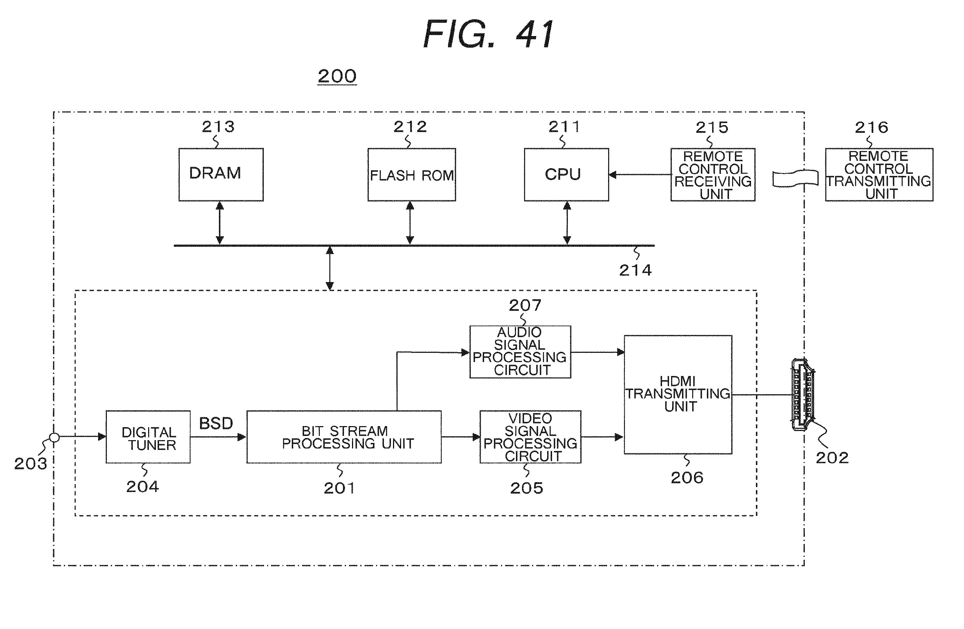

A configuration example of the set-top box 200 will be described. Fig. 41 illustrates a configuration example of the set-top box 200. The set-top box 200 includes a bit stream processing unit 201, a HDMI terminal 202, an antenna terminal 203, a digital tuner 204, a video signal processing circuit 205, a HDMI transmitting unit 206, and an audio signal processing circuit 207. In addition, the set-top box 200 further includes a CPU 211, a flash ROM 212, a DRAM 213, an internal bus 214, a remote control receiving unit 215, and a remote control transmitting unit 216.

The antenna terminal 203 is a terminal for receiving a television broadcasting signal received by a receiving antenna (not illustrated). The digital tuner 204 processes the television broadcasting signal input to the antenna terminal 203 and outputs predetermined bit stream data (transport stream) BSD corresponding to a channel selected by a user.

The bit stream processing unit 201 extracts stereoscopic image data, audio data, stereoscopic image subtitle data (including display control information), and the like from the bit stream data BSD as described above. The bit stream processing unit 201 combines the display data of the left-eye subtitle and the right-eye subtitle with the stereoscopic image data and obtains the display stereoscopic image data where the subtitle is overlapped. In addition, the bit stream processing unit 201 outputs the audio data.

In this case, the bit stream processing unit 201 shift-adjusts the display positions (overlapping positions) of the left-eye subtitle in the left-eye RP and the right-eye subtitle in the right-eye RP based on the display control information. As described above, the display control information includes area information of the left-eye RP and the right-eye RP and shift information (disparity information and movement information of the display positions) of the display positions of the left-eye subtitle in the left-eye RP and the right-eye subtitle in the right-eye RP. A configuration of the bit stream processing unit 201 will be described in detail below.

The video signal processing circuit 205 performs an image quality adjustment processing and the like, as necessary, for the display stereoscopic image data obtained by the bit stream processing unit 201 and supplies the display stereoscopic image data subjected to the processing to the HDMI transmitting unit 206. The audio signal processing circuit 207 performs an audio quality adjustment processing, as necessary, for the audio data output from the bit stream processing unit 201 and supplies the audio data subjected to the processing to the HDMI transmitting unit 206.

The HDMI transmitting unit 206 transmits, for example, the uncompressed image data and the audio data from the HDMI terminal 202 through communication conforming to the HDMI. In this case, in order to transmit data through the TMDS channel of the HDMI, the image data and the audio data are packed and output from the HDMI transmitting unit 206 to the HDMI terminal 202.

For example, when the transmission format of stereoscopic image data from the broadcasting station 100 is the side-by-side format, the TMDS transmission format is set to the side-by-side format (refer to Fig. 37). For example, when the transmission format of stereoscopic image data from the broadcasting station 100 is the top-and-bottom format, the TMDS transmission format is set to the top-and-bottom format (refer to Fig. 38).

The CPU 211 controls operations of each unit of the set-top box 200. The flash ROM 212 stores control software and data. The DRAM 213 serves as a work area of the CPU 211. The CPU 211 deploys software or data read from the flash ROM 212 on the DRAM 213 and operates software to control each unit of the set-top box 200.

The remote control receiving unit 215 receives a remote control signal (remote control code) transmitted from the remote control transmitting unit 216 and supplies it to the CPU 211. The CPU 211 controls each unit of the set-top box 200 based on the remote control code. The CPU 211, the flash ROM 212, and the DRAM 213 are connected to the internal bus 214.

The operation of the set-top box 200 will be described in brief. The television broadcasting signal input to the antenna terminal 203 is supplied to the digital tuner 204. The digital tuner 204 processes the television broadcasting signal and outputs predetermined bit stream data (transport stream) BSD according to the channel selected by a user.

The bit stream data BSD output from the digital tuner 204 is supplied to the bit stream processing unit 201. The bit stream processing unit 201 extracts stereoscopic image data, audio data, stereoscopic image subtitle data (including display control information), and the like from the bit stream data BSD. The bit stream processing unit 201 combines the display data (bitmap data) of the left-eye subtitle and the right-eye subtitle with the stereoscopic image data to obtain display stereoscopic image data where the subtitle is overlapped.

In this case, the video stream processing unit 201 shift-adjusts the display (overlapping) positions of the left-eye subtitle in the left-eye RP and the right-eye subtitle in the right-eye RP based on the display control information. Through the shift adjustment, in display of the subtitle (caption), it is possible to maintain optimal conformity of depth perception between each object in an image for a part of or the entire subtitle. In addition, through the shift adjustment, in display of the subtitle (caption), it is possible to move the display position for a part of or the entire subtitle.

The display stereoscopic image data obtained by the bit stream processing unit 201 is supplied to the video signal processing circuit 205. The video signal processing circuit 205 performs the image quality adjustment processing and the like, as necessary, for the display stereoscopic image data. The display stereoscopic image data subjected to the processing and output from the video signal processing circuit 205 is supplied to the HDMI transmitting unit 206.

The audio data obtained by the bit stream processing unit 201 is supplied to the audio signal processing circuit 207. The audio signal processing circuit 207 performs an audio quality adjustment processing and the like, as necessary, for the audio data. The audio data subjected to the processing and output from the audio signal processing circuit 207 is supplied to the HDMI transmitting unit 206. In addition, the stereoscopic image data and the audio data supplied to the HDMI transmitting unit 206 are output to the HDMI cable 400 from the HDMI terminal 202 using the TMDS channel of the HDMI.

### [Configuration Example of Bit Stream Processing Unit]

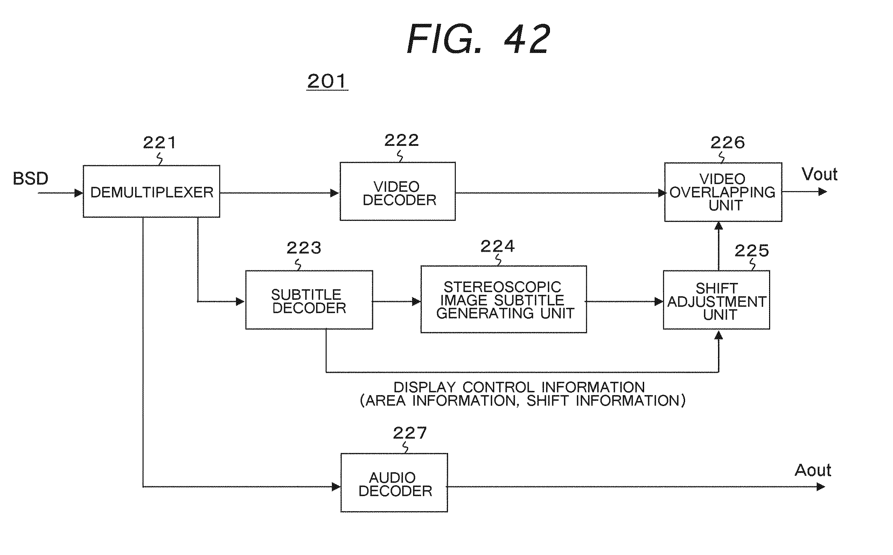

Fig. 42 illustrates a configuration example of the bit stream processing unit 201. The bit stream processing unit 201 has a configuration corresponding to the transmission data generating unit 110 of Fig. 2 described above. The bit stream processing unit 201 includes a demultiplexer 221, a video decoder 222, a subtitle decoder 223, a stereoscopic image subtitle generating unit 224, a shift adjustment unit 225, a video overlapping unit 226, and audio encoder 227.

The demultiplexer 221 extracts video packets, audio packets, and subtitle packets from the bit stream data BSD and transmits them to each decoder. The demultiplexer 221 extracts information such as PMT and EIT inserted into the bit stream data BSD and transmits it to the CPU 211. As described above, the component/descriptor of the EIT describes "Stream_content ('0x03' = DVB subtitles) & Component_type (for 3D target)." As a result, it is possible to identify that the stereoscopic image subtitle data is included in the subtitle data stream. Therefore, the CPU 211 can identify that the stereoscopic image subtitle data is included in the subtitle data stream based on this description.

The video decoder 222 performs a processing opposite to that of the video encoder 119 of the transmission data generating unit 110 described above. That is, the video decoder 222 reconstructs the video data stream from the video packets extracted by the demultiplexer 221 and performs decoding to obtain stereoscopic image data including the left-eye image data and the right-eye image data. The transmission format of the stereoscopic image data is set to, for example, a side-by-side format, a top-and-bottom format, and the like.

The subtitle decoder 223 performs a processing opposite to that of the subtitle encoder 125 of the transmission data generating unit 110 described below. That is, the subtitle decoder 212 reconstructs the subtitle data stream from the subtitle packets extracted by the demultiplexer 221 and performs a decoding process to obtain stereoscopic image subtitle data (including the display control information). The stereoscopic image subtitle generating unit 224 generates display data (bitmap data) of the left-eye subtitle and the right-eye subtitle overlapped with the stereoscopic image data based on the stereoscopic image subtitle data (excluding the display control information). The stereoscopic image subtitle generating unit 224 serves as a display data generating unit.

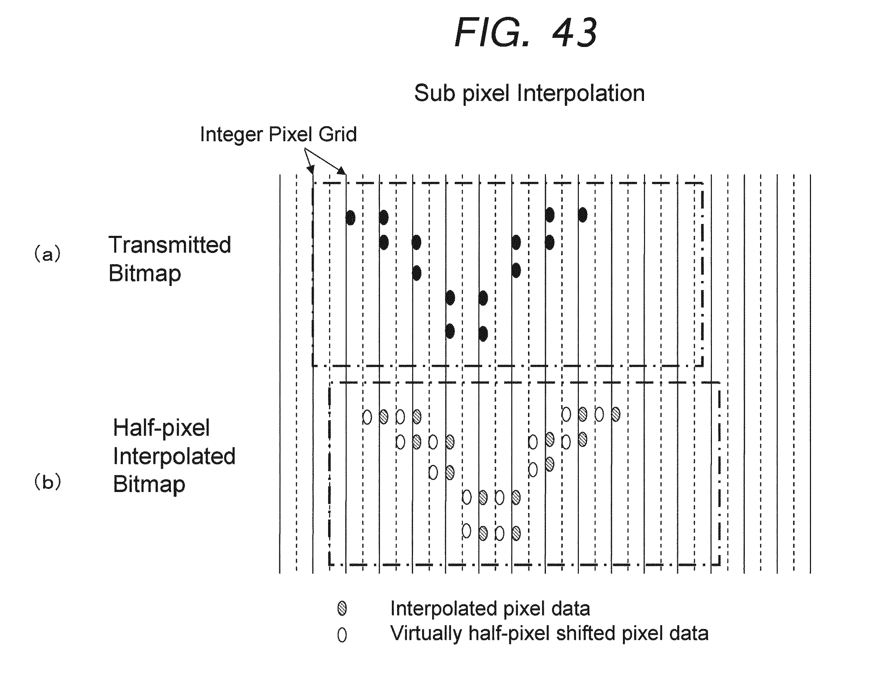

The shift adjustment unit 225 receives the display data generated by the stereoscopic image subtitle generating unit 224 shift-adjusts the display positions (overlapping positions) of the left-eye subtitle in the left-eye RP and the right-eye subtitle in the right-eye RP based on the display control information, and outputs the results. As described above, the shift information of display position included in the display control information has a sub-pixel precision level (refer to Fig. 8). For this reason, the shift adjustment unit 225 shift-adjusts at the sub-pixel precision level using an interpolation process. Fig. 43 schematically illustrates an example of the interpolation process when the shifting is made by a 1/2 pixel in a horizontal direction. In Fig. 43(a), the filled circles indicate received data. In Fig. 43(b), the blanked circles indicate a state that the received data is simply shifted by 1/2 of a pixel in a horizontal direction. However, the data indicated by the blanked circles have no data on the pixel positions. In this regard, the shift adjustment unit 225 performs an interpolation process for the data indicated by the blanked circles to generate data of the pixel positions indicated by the hatched circles in Fig. 43(b) and sets them as data subjected to the shift adjustment.

The video overlapping unit 226 obtains the display stereoscopic image data Vout. In this case, the video overlapping unit 226 overlaps the display data (bitmap data) of the left-eye subtitle and the right-eye subtitle shift-adjusted by the shift adjustment unit 225 with the stereoscopic image data obtained by the video decoder 222. In addition, the video overlapping unit 226 outputs the display stereoscopic image data Vout to an external unit of the bit stream processing unit 201.

The audio decoder 227 performs a processing opposite to that of the audio encoder 120 of the transmission data generating unit 110 described above. That is, the audio decoder 227 reconstructs the audio elementary stream from the audio packet extracted by the demultiplexer 221 and performs a decoding process to obtain audio data Aout. In addition, the audio decoder 227 outputs the audio data Aout to an external unit of the bit stream processing unit 201.

The operation of the bit stream processing unit 201 of Fig. 42 will be described in brief. The bit stream data BSD output from the digital tuner 204 (refer to Fig. 41) is supplied to the demultiplexer 221. The demultiplexer 221 extracts video packets, audio packets, and subtitle packets from the bit stream data BSD and supplies them to each decoder.

The video decoder 222 reconstructs the video data stream from the video packets extracted by the demultiplexer 221 and performs a decoding process to obtain stereoscopic image data including the left-eye image data and the right-eye image data. This stereoscopic image data is supplied to the video overlapping unit 226.

The subtitle decoder 223 reconstructs the subtitle data stream from the subtitle packets extracted by the demultiplexer 221 and performs a decoding process to obtain stereoscopic image subtitle data (including the display control information). This subtitle data is supplied to the stereoscopic image subtitle generating unit 224.

The stereoscopic image subtitle generating unit 224 generates the display data (bitmap data) of the left-eye subtitle and the right-eye subtitle overlapped with the stereoscopic image data based on the stereoscopic image subtitle data (excluding the display control information). This display data is supplied to the shift adjustment unit 225. In addition, the shift adjustment unit 225 is supplied with the display control information from the subtitle decoder 223. The shift adjustment unit 225 adjusts shift of the display positions (overlapping positions) of the left-eye subtitle in the left-eye RP and the right-eye subtitle in the right-eye RP based on the display control information.

The display data shift-adjusted by the shift adjustment unit 225 (display data of the left-eye subtitle and the right-eye subtitle overlapped with the stereoscopic image data) is supplied to the video overlapping unit 226. The video overlapping unit 226 overlaps the display data shift-adjusted by the shift adjustment unit 225 with the stereoscopic image data obtained by the video decoder 222 to obtain display stereoscopic image data Vout. The display stereoscopic image data Vout is output to an external unit of the bit stream processing unit 201.

The audio decoder 227 reconstructs the audio elementary stream from the audio packets extracted by the demultiplexer 221 and performs a decoding process to obtain audio data Aout corresponding to the display stereoscopic image data Vout described above. The audio data Aout is output to an external unit of the bit stream processing unit 201.

In the set-top box 200 illustrated in Fig. 42, the bit stream data BSD output from the digital tuner 204 is a multiplexed data stream having the video data stream and the subtitle data stream. The video data stream includes the stereoscopic image data. In addition, the subtitle data stream includes stereoscopic image (3D image) subtitle data conforming to the transmission format of the stereoscopic image data.

The stereoscopic image subtitle data includes the left-eye subtitle data and the right-eye subtitle data. For this reason, in the stereoscopic image subtitle generating unit 224 of the bit stream processing unit 201, it is possible to easily generate the display data of the left-eye subtitle overlapped with the left-eye image data of the stereoscopic image data. In addition, in the stereoscopic image subtitle generating unit 224 of the bit stream processing unit 201, it is possible to easily generate the display data of the right-eye subtitle overlapped with the right-eye image data of the stereoscopic image data. As a result, it is possible to facilitate the processing.

In the set-top box 200 illustrated in Fig. 42, the bit stream data BSD output from the digital tuner 204 includes display control information in addition to the stereoscopic image data and the stereoscopic image subtitle data. The display control information includes area information of the left-eye RP and the right-eye RP and shift information of the display positions of the left-eye subtitle in the left-eye RP and the right-eye subtitle in the right-eye RP. For this reason, in the shift adjustment unit 225, it is possible to shift-adjust the display data of the left-eye subtitle and the right-eye subtitle based on the shift information such that the display positions of the left-eye subtitle in the left-eye RP and the right-eye subtitle in the right-eye RP can be shifted.

Therefore, if the shift information is shift information (disparity information) for assigning disparity to the display positions of the left-eye subtitle in the left-eye RP and the right-eye subtitle in the right-eye RP, the following effect can be obtained. That is, in display of the subtitle (caption), it is possible to maintain optimal conformity of depth perception between each object in an image for a part of or the entire subtitle. In addition, if the shift information is shift information (movement information of the display position) for equally moving the display positions of the left-eye subtitle in the left-eye RP and the right-eye subtitle in the right-eye RP, the following effect can be obtained. That is, in display of the subtitle (caption), it is possible to move the display position for a part of or the entire subtitle.

### [Description of Television Receiver]

Returning to Fig. 1, the television receiver 300 receives the stereoscopic image data transmitted from the set-top box 200 through the HDMI cable 400. The television receiver 300 has a 3D-signal processing unit 301. The 3D-signal processing unit 301 performs a processing (decoding) conforming to the transmission format for the stereoscopic image data to generate the left-eye image data and the right-eye image data.

### [Configuration Example of Television Receiver]

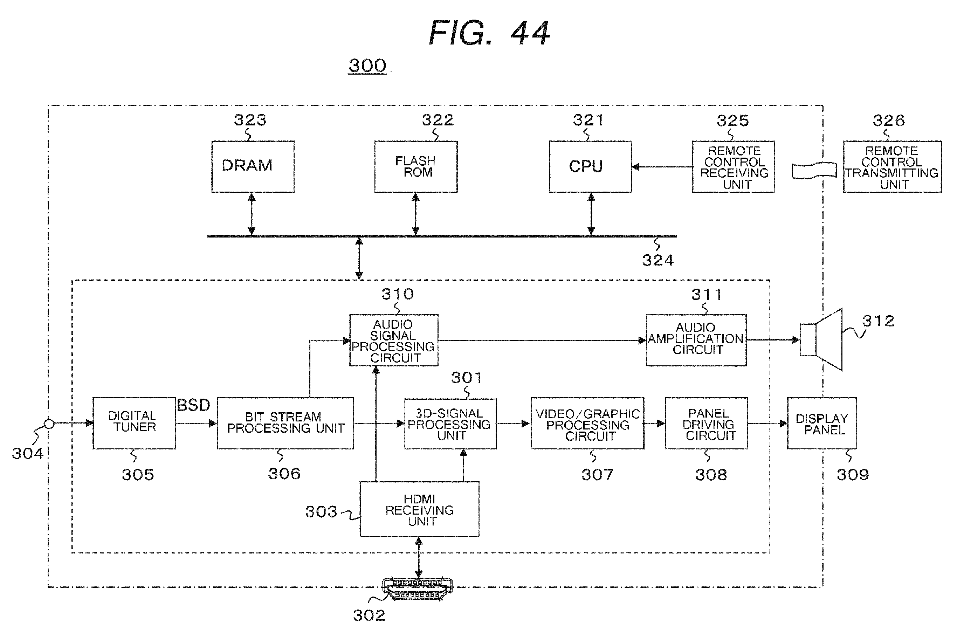

A configuration example of the television receiver 300 will be described. Fig. 44 illustrates a configuration example of the television receiver 300. The television receiver 300 includes the 3D-signal processing unit 301, a HDMI terminal 302, a HDMI receiving unit 303, an antenna terminal 304, a digital tuner 305, and a bit stream processing unit 306.

The television receiver 300 includes a video graphic processing circuit 307, a panel driving circuit 308, a display panel 309, an audio signal processing circuit 310, an audio amplification circuit 311, and a loudspeaker 312. In addition, the television receiver 300 includes a CPU 321, a flash ROM 322, a DRAM 323, an internal bus 324, a remote control receiving unit 325, and a remote control transmitting unit 326.

The antenna terminal 304 is a terminal where a television broadcasting signal received by the receiving antenna (not illustrated) is input. The digital tuner 305 processes the television broadcasting signal input to the antenna terminal 304 and outputs predetermined bit stream data (transport stream) BSD corresponding to the channel selected by a user.

The bit stream processing unit 306 has the same configuration as that of the bit stream processing unit 201 of the set-top box 200 illustrated in Fig. 41. The bit stream processing unit 306 extracts stereoscopic image data, audio data, stereoscopic image subtitle data (including display control information), and the like from the bit stream data BSD.

The bit stream processing unit 306 combines the display data of the left-eye subtitle and the right-eye subtitle with the stereoscopic image data to generate display stereoscopic image data where the subtitle is overlapped and outputs the result. In addition, the bit stream processing unit 306 outputs audio data. In this case, the bit stream processing unit 306 shift-adjusts the display (overlapping) positions of the left-eye subtitle in the left-eye RP and the right-eye subtitle in the right-eye RP based on the display control information. In addition, the bit stream processing unit 306 outputs audio data.

The HDMI receiving unit 303 receives uncompressed image data and audio data supplied to the HUMI terminal 302 through the HUMI cable 400 using communication conforming to the HDMI. The HDMI receiving unit 303 has a version of, for example, HDMI 1.4a, and has a state that the stereoscopic image data can be handled.

The 3D-signal processing unit 301 performs decoding for the stereoscopic image data received by the HDMI receiving unit 303 or obtained by the bit stream processing unit 306 to generate the left-eye image data and the right-eye image data. In this case, the 3D-signal processing unit 301 performs decoding conforming to the transmission format (refer to Fig. 4) for the stereoscopic image data obtained by the bit stream processing unit 306. In addition, the 3D-signal processing unit 301 performs decoding conforming to the TMDS transmission data format for the stereoscopic image data received by the HDMI receiving unit 303.

The video graphic processing circuit 307 generates image data for displaying the stereoscopic image based on the left-eye image data and the right-eye image data generated by the 3D-signal processing unit 301. In addition, the video graphic processing circuit 307 performs an image quality adjustment processing, as necessary, for the image data. In addition, the video graphic processing circuit 307 combines data of the overlapping information such as a menu and a program table, as necessary, for the image data. The panel driving circuit 308 drives the display panel 309 based on the image data output from the video graphic processing circuit 307. The display panel 309 includes, for example, a liquid crystal display (LCD), a plasma display panel (PDP), and the like.

The audio signal processing circuit 310 performs necessary processes such as D/A conversion for the audio data received by the HDMI receiving unit 303 or obtained by the bit stream processing unit 306. The audio amplification circuit 311 amplifies the audio signal output from the audio signal processing circuit 310 and supplies the amplified signal to the loudspeaker 312.

The CPU 321 controls operations of each unit of the television receiver 300. The flash ROM 322 stores control software and data. DRAM 323 serves as a work area of the CPU 321. The CPU 321 deploys software or data read from the flash ROM 322 on the DRAM 323 and activates software to control each unit of the television receiver 300.

The remote control receiving unit 325 receives a remote control signal (remote control code) transmitted from the remote control transmitting unit 326 and supplies it to the CPU 321. The CPU 321 controls each unit of the television receiver 300 based on the remote control code. The CPU 321, the flash ROM 322, and the DRAM 323 are connected to the internal bus 324.

Operations of the television receiver 300 illustrated in Fig. 44 will be described in brief. The HDMI receiving unit 303 receives stereoscopic image data and audio data transmitted from the set-top box 200 connected to the HDMI terminal 302 through the HDMI cable 400. The stereoscopic image data received by the HDMI receiving unit 303 is supplied to the 3D-signal processing unit 301. In addition, the audio data received by the HDMI receiving unit 303 is supplied to the audio signal processing circuit 310.

The television broadcasting signal input to the antenna terminal 304 is supplied to the digital tuner 305. The digital tuner 305 processes the television broadcasting signal and outputs predetermined bit stream data (transport stream) BSD corresponding to the channel selected by a user.

The bit stream data BSD output from the digital tuner 305 is supplied to the bit stream processing unit 306. The bit stream processing unit 306 extracts stereoscopic image data, audio data, stereoscopic image subtitle data (including display control information), and the like from the bit stream data BSD. The bit stream processing unit 306 combines the display data of the left-eye subtitle and the right-eye subtitle for the stereoscopic image data to create display stereoscopic image data where the subtitle is overlapped. In this case, the display positions (overlapping positions) of the left-eye subtitle in the left-eye RP and the right-eye subtitle in the right-eye RP are shift-adjusted based on the display control information.

The display stereoscopic data generated by the bit stream processing unit 306 is supplied to the 3D-signal processing unit 301. In addition, the audio data obtained by the bit stream processing unit 306 is supplied to the audio signal processing circuit 310.

The 3D-signal processing unit 301 performs decoding for the stereoscopic image data received by the HDMI receiving unit 303 or obtained by the bit stream processing unit 306 to generate the left-eye image data and the right-eye image data. The left-eye image data and the right-eye image data are supplied to the video graphic processing circuit 307. The video graphic processing circuit 307 generates image data for displaying the stereoscopic image based on the left-eye image data and the right-eye image data and also performs the image quality adjustment process and the overlapping information data combining process as necessary.

The image data obtained by the video graphic processing circuit 307 is supplied to the panel driving circuit 308. For this reason, the stereoscopic image is displayed by the display panel 309. For example, the left-eye image based on the left-eye image data and the right-eye image based on the right-eye image data are alternately displayed on the display panel 309 in a time-division manner. If a viewer wears shutter spectacles that alternately opens a left-eye shutter and a right-eye shutter in synchronization with display of the display panel 309, only the left-eye image is viewed by the left eye, and only the right-eye image is viewed by the right eye so that a viewer can recognize the stereoscopic image.

The audio data obtained by the bit stream processing unit 306 is supplied to the audio signal processing circuit 310. The audio signal processing circuit 310 performs necessary processes such as D/A conversion for the audio data received by the HDMI receiving unit 303 or obtained by the bit stream processing unit 306. The audio data is amplified by the audio amplification circuit 311 and supplied to the loudspeaker 312. For this reason, the audio corresponding to the display image of the display panel 309 is output from the loudspeaker 312.

As described above, the image transceiver system 10 of Fig. 1 transmits the multiplexed data stream having the video data stream and the subtitle data stream to the set-top box 200 from the broadcasting station 100 (transmission data generating nit 201). The video data stream includes the stereoscopic image data. In addition, the subtitle data stream includes stereoscopic image (3D image) subtitle data conforming to the transmission format of the stereoscopic image data.

The stereoscopic image subtitle data includes left-eye subtitle data and the right-eye subtitle data. For this reason, in the set-top box 200, it is possible to easily generate display data of the left-eye subtitle overlapped with the left-eye image data of the stereoscopic image data. In the set-top box 200, it is possible to easily generate display data of the right-eye subtitle overlapped with the right-eye image data of the stereoscopic image data. As a result, it is possible to facilitate the processing of the bit data processing unit 201.

In the image transceiver system 10 of Fig. 1, the bit stream data BSD output from the transmission data generating unit 110 of the broadcasting station 100 includes display control information in addition to stereoscopic image data and stereoscopic image subtitle data. The display control information includes area information of the left-eye RP and the right-eye RP and shift information of the display positions of the left-eye subtitle in the left-eye RP and the right-eye subtitle in the right-eye RP. For this reason, in the set-top box 200, it is possible to shift-adjust the display data of the left-eye subtitle and the right-eye subtitle based on the shift information such that the display positions of the left-eye subtitle in the left-eye RP and the right-eye subtitle in the right-eye RP are shifted.

Therefore, if the shift information is shift information (disparity information) for assigning disparity to the display positions of the left-eye subtitle in the left-eye RP and the right-eye subtitle in the right-eye RP, the following effect can be obtained. That is, in the set-top box 200, for display of the subtitle (caption), it is possible to maintain optimal conformity of depth perception between each object in an image for a part of or the entire subtitle (caption). In addition, if the shift information is shift information (movement information of the display position) for equally moving the display positions of the left-eye subtitle in the left-eye RP and the right-eye subtitle in the right-eye RP, the following effect can be obtained. That is, in the set-top box 200, for display of the subtitle (caption), it is possible to move the display position for a part of or the entire subtitle.

The image transceiver system 10 of Fig. 1 can sequentially transmit the RPCS segment corresponding to each frame of the subtitle display period from the transmission data generating unit 110 of the broadcasting station 100. For this reason, in the set-top box 200, it is possible to shift the display positions of the left-eye subtitle in the left-eye RP and the right-eye subtitle in the right-eye RP using the display control information (shift information) sequentially updated in each frame of the subtitle display period. Therefore, it is possible to dynamically change disparity assigned to a part of or the entire subtitle (caption) in synchronization with the change of the image content. In addition, it is possible to obtain a display effect for dynamically changing the display position for a part of or the entire subtitle (caption).

In the image transceiver system 10 of Fig. 1, the shift information (disparity information or the like) included in the RPCS segment created by the transmission data generating unit 110 of the broadcasting station 100 has a sub-pixel precision level. For this reason, in the set-top box 200, if the display positions of the left-eye subtitle in the left-eye RP and the right-eye subtitle in the right-eye RP sequentially updated in each frame of the subtitle display period are shift-adjusted based on the shift information, it possible to smoothly perform the shift operation. As a result, it is possible to improve image quality.

### <2. Modification Example>

In the embodiments described above, the third syntax example of "Region_Partition_payload()" illustrated in Figs. 28 to 30 is computed in a separate loop in the RPCS so that "offset_sequence" of the x-axis, the γ-axis, and the z-axis can be inserted. However, it is possible to be considered inserting the "offset_sequence" of the x-axis, the γ-axis, and the z-axis using the same loop.

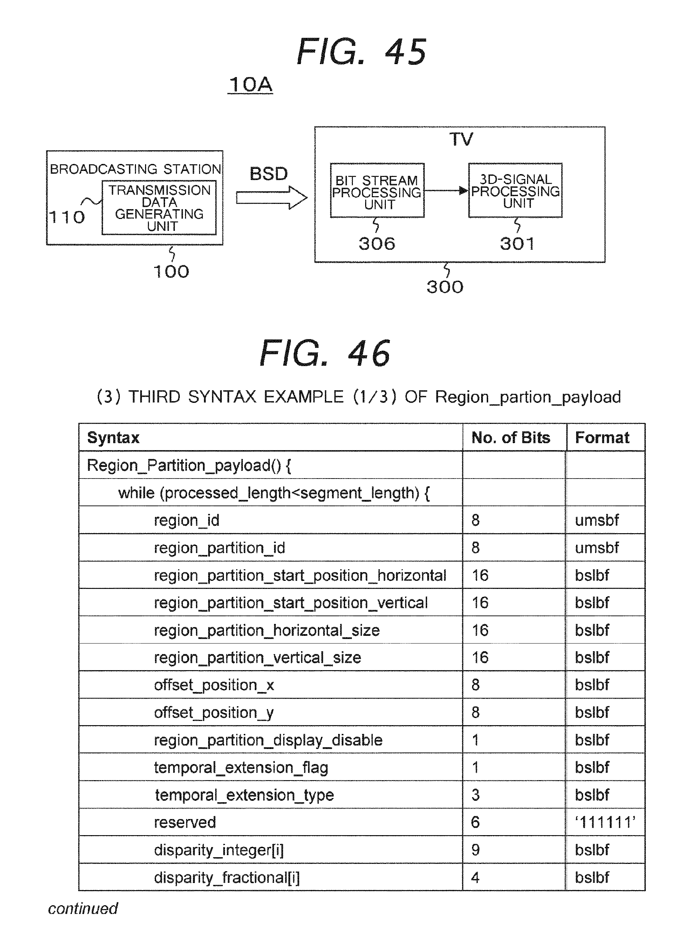

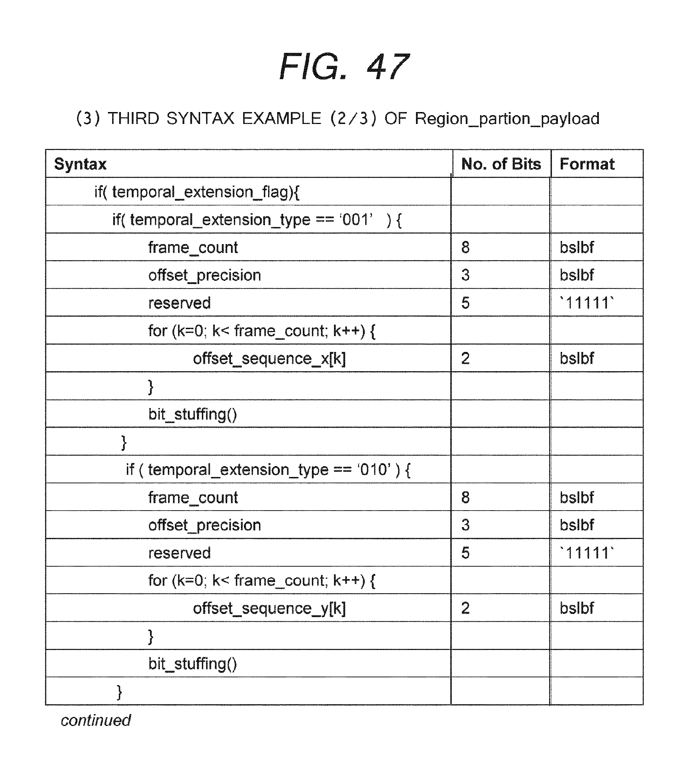

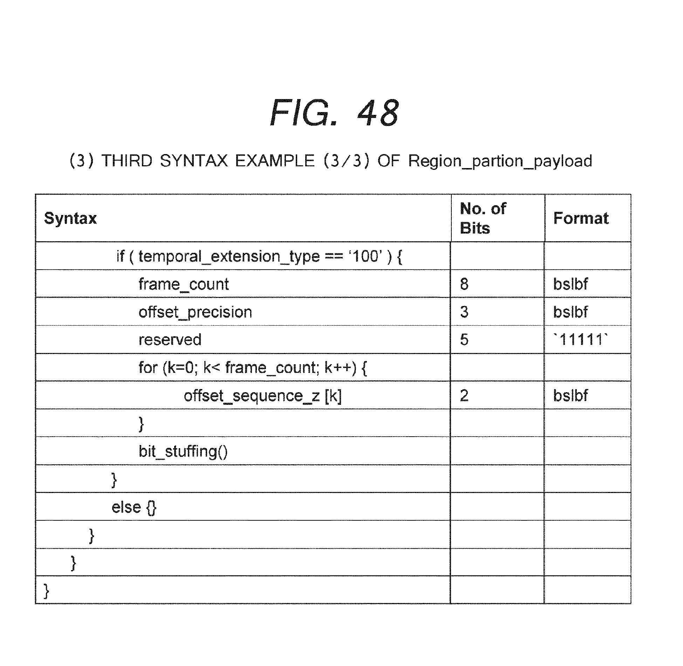

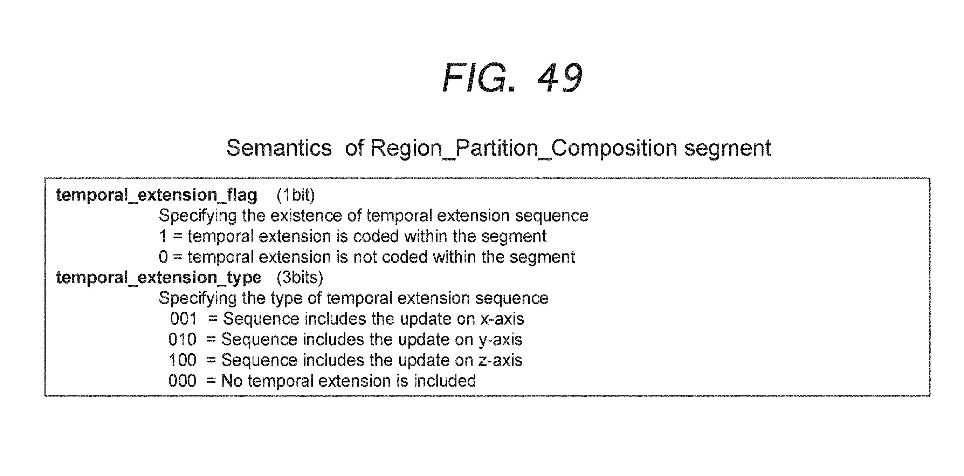

Figs. 46 to 48 illustrate another example of third syntax of "Region_Partition_payload()." Fig. 49 illustrates a part of data semantics in the third syntax example. "temporal_extension_flg" is 1-bit flag information representing whether or not disparity information and update information for each frame of the display position are included. "temporal_extension_flg = 1" represents that the information is included, and "temporal_extension_flg = 0" represents that information is not included.

"temporal_extension_type" is 3-bit information representing whether or not the disparity information and the update information for each frame of the display position are included. "temporal_extension_type = 001" represents that update information of the x-axis (horizontal direction of the display position) is included. "temporal_extension_type =010" represents that the update information of the γ-axis (vertical direction of the display position) is included. "temporal_extension_type = 100" represents that the update information of the z-axis (disparity information) is included.

In the embodiments described above, the image transceiver system 10 includes a broadcasting station 100, a set-top box 200, and a television receiver 300. However, as illustrated in Fig. 44, the television receiver 300 includes a bit stream processing unit 306 for similarly functioning as the bit stream processing unit 201 in the set-top box 200. Therefore, as illustrated in Fig. 45, the image transceiver system 10A includes a broadcasting station 100 and a television receiver 300 may be considered.

In the embodiments described above, an example in which the data stream (bit stream data) including the stereoscopic image data is broadcasted from the broadcasting station 100 has been described. However, the present invention may be similarly applied to a system having a configuration in which the data stream is transmitted to the receiving terminal using a network such as the Internet

In the embodiments described above, the set-top box 200 and the television receiver 300 are connected via the HDMI digital interface. However, the present invention may be similarly applied to a case where they are connected to a digital interface (including a wireless or wired interface) having similar digital interface as the HDMI digital interface.

In the embodiments described above, the subtitle (caption) is treated as the overlapping information. However, the present invention may be similarly applied to a case where overlapping information such as graphics information and text information is handled.

In the embodiments described above, the RPCS segment is newly defined, and the display control information is supplied from the broadcasting station 100 to the set-top box 200 using this segment. However, a method of supplying the display control information to the set-top box 200 is not limited thereto, and, for example, the set-top box 200 may obtain the display control information from the Internet as necessary.

### INDUSTRIAL APPLICABILITY

The present invention may be applied to a stereoscopic image system capable of displaying overlapping information such as the subtitle (caption) on an image.

### REFERENCE SIGNS LIST

- 10, 10A: Image transceiver system
- 100: Broadcasting station
- 110: Transmission data generating unit
- 111L, 111R: Camera
- 112: Video framing unit
- 113: Disparity vector detection unit
- 114: Microphone
- 115: Data output unit
- 115a: Data recording medium
- 116 to 118: Switch
- 119: Video encoder
- 120: Audio encoder
- 121: Subtitle encoder
- 122: Disparity information creating unit
- 123: Subtitle processing unit
- 124: Display control information generating unit
- 125: Subtitle encoder
- 126: Multiplexer
- 200: Set-top box (STB)
- 201: Bit stream processing unit
- 202: HUMI terminal
- 203: Antenna terminal
- 204: Digital tuner
- 205: Video signal processing circuit
- 206: HDMI transmitting unit
- 207: Audio signal processing circuit
- 211: CPU
- 215: Remote control receiving unit
- 216: Remote control transmitting unit
- 221: Demultiplexer
- 222: Video decoder
- 223: Subtitle decoder
- 224: Stereoscopic image subtitle generating unit
- 225: Shift adjustment unit
- 226: Video overlapping unit
- 227: Audio decoder
- 300: Television receiver (TV)
- 301: 3D-signal processing unit
- 302: HDMI terminal
- 303: HDMI receiving unit
- 304: Antenna terminal
- 305: Digital tuner
- 306: Bit stream processing unit
- 307: Video-graphic processing circuit
- 308: Panel driving circuit
- 309: Display panel
- 310: Audio signal processing circuit
- 311: Audio amplification circuit
- 312: Loudspeaker
- 321: CPU
- 325: Remote control receiving unit
- 326: Remote control transmitting unit
- 400: HDMI cable

## Claims

1. A stereoscopic image data transmission device comprising:
an image data output unit that outputs stereoscopic image data of a predetermined transmission format having left-eye image data and right-eye image data;
an overlapping information data output unit that outputs data of overlapping information overlapped on an image for the left-eye image data and the right-eye image data;
an overlapping information data processing unit that converts data of the overlapping information output from the overlapping information data output unit into transmission overlapping information data having data of left-eye overlapping information corresponding to the left-eye image data included in the stereoscopic image data of the predetermined transmission format and data of right-eye overlapping information corresponding to the right-eye image data included in the stereoscopic image data of the predetermined transmission format;
a display control information generating unit that generates area information of a left-eye control area including a part of or the entire area on the left-eye image where the left-eye overlapping information based on the transmission overlapping information data output from the overlapping information data processing unit is overlapped and a right-eye control area including a part of or the entire area on the right-eye image where the right-eye overlapping information based on the transmission overlapping information data output from the overlapping information data processing unit is overlapped, and display control information including shift information of the left-eye control area and the right-eye control area; and
a data transmitting unit that transmits a multiplexed data stream having a first data stream including the stereoscopic image data output from the image data output unit and a second data stream including the transmission overlapping information data output from the overlapping information data processing unit and the display control information generated by the display control information generating unit.

2. The stereoscopic image data transmission device according to claim 1, wherein the shift information of the left-eye control area and the right-eye control area included in the display control information is shift information for assigning disparity to display positions of left-eye overlapping information in the left-eye control area and right-eye overlapping information in the right-eye control area.

3. The stereoscopic image data transmission device according to claim 2, further comprising a disparity information output unit that outputs disparity information between the left-eye image based on the left-eye image data and the right-eye image based on the right-eye image data,
wherein the display control information generating unit generates shift information for assigning disparity to display positions of left-eye overlapping information in the left-eye control area and right-eye overlapping information in the right-eye control area based on the disparity information output from the disparity information output unit.

4. The stereoscopic image data transmission device according to claim 1, wherein the shift information of the left-eye control area and the right-eye control area included in the display control information is shift information for equally moving display positions of the left-eye overlapping information in the left-eye control area and the right-eye overlapping information in the right-eye control area.

5. The stereoscopic image data transmission device according to claim 1, wherein the shift information included in the display control information generated by the display control information generating unit is shift information sequentially updated in each frame of a predetermined number of frame periods for displaying the overlapping information.

6. The stereoscopic image data transmission device according to claim 5, wherein the shift information included in the display control information generated by the display control information generating unit includes shift information of a first frame of a predetermined number of frame periods and offset information for the shift information of previous frames subsequent to a second frame.

7. The stereoscopic image data transmission device according to claim 1, wherein the display control information generating unit sequentially generates the display control information in each frame of a predetermined number of frame periods for displaying the overlapping information.

8. The stereoscopic image data transmission device according to claim 1, wherein the shift information generated by the display control information generating unit has a sub-pixel precision level.

9. The stereoscopic image data transmission device according to claim 1, wherein the display control information generated by the display control information generating unit includes command information for controlling on/off of display of the left-eye overlapping information in the left-eye control area and the right-eye overlapping information in the right-eye control area.

10. The stereoscopic image data transmission device according to claim 1, wherein the data transmitting unit inserts, into the multiplexed data stream, identification information for identifying that the transmission overlapping information data conforming to a transmission format of the stereoscopic image data is included in the second data stream.

11. A method of transmitting stereoscopic image data, comprising:
an image data output step for outputting stereoscopic image data having left-eye image data and right-eye image data of a predetermined transmission format;
an overlapping information data outputting step for outputting data of overlapping information overlapped with an image for the left-eye image data and the right-eye image data;
an overlapping information data processing step for converting data of the overlapping information output in the overlapping information data outputting step into transmission overlapping information data having data of left-eye overlapping information corresponding to the left-eye image data included in the stereoscopic image data of the predetermined transmission format and data of right-eye overlapping information corresponding to the right-eye image data included in stereoscopic image data of the predetermined transmission format;
a display control information generating step for generating area information of a left-eye control area including a part of or the entire area on a left-eye image where left-eye overlapping information based on the transmission overlapping information data output in the overlapping information data processing step is overlapped and a right-eye control area including a part of or the entire area on the right-eye image where the right-eye overlapping information based on the transmission overlapping information data output in the overlapping information data processing step is overlapped and display control information including shift information of the left-eye control area and the right-eye control area; and
a data transmitting step for transmitting a multiplexed data stream having a first data stream including the stereoscopic image data output in the image data outputting step and a second data stream including the transmission overlapping information data output in the overlapping information data processing step and the display control information generated in the display control information generating step.

12. An stereoscopic image data reception device comprising:
a data receiving unit that receives a multiplexed data stream having a first data stream and a second data stream,
the first data stream including stereoscopic image data of a predetermined transmission format having left-eye image data and right-eye image data, and
the second data stream including transmission overlapping information data having data of left-eye overlapping information corresponding to the left-eye image data included in the stereoscopic image data of the predetermined transmission format and data of right-eye overlapping information corresponding to the right-eye image data, area information of a left-eye control area including a part of or the entire area on a left-eye image where left-eye overlapping information based on the transmission overlapping information data is overlapped and a right-eye control area including a part of or the entire area on a right-eye image where right-eye overlapping information based on the transmission overlapping information data is overlapped, and display control information having shift information of the left-eye control area and the right-eye control area;
an image data obtaining unit that obtains the stereoscopic image data from the first data stream having the multiplexed data stream received by the data receiving unit;
an overlapping information data obtaining unit that obtains the transmission overlapping information data from the second data stream of the multiplexed data stream received by the data receiving unit;
a display control information obtaining unit that obtains display control information from the second data stream of the multiplexed data stream received by the data receiving unit;
a display data generating unit that generates display data for overlappingly displaying left-eye overlapping information and right-eye overlapping information on the left-eye image and the right-eye image based on the transmission overlapping information data obtained by the overlapping information data obtaining unit;
a shift adjustment unit that receives display data generated by the display data generating unit, shift-adjusts positions of display data of the left-eye control area and the right-eye control area indicated by area information of the display control information obtained by the display control information obtaining unit based on shift information of the display control information obtained by the display control information obtaining unit, and outputs the results; and
a data combining unit that overlaps display data subjected to the shifting and adjustment and output from the shift adjustment unit with the stereoscopic image data obtained by the image data obtaining unit to obtain output stereoscopic image data.

13. The stereoscopic image data reception device according to claim 12, further comprising a digital interface unit that transmits the output stereoscopic image data obtained by the data combining unit to an external device.

14. The stereoscopic image data reception device according to claim 12, further comprising:
an identification information obtaining unit that obtains the identification information from the multiplexed data stream received by the data receiving unit; and
an overlapping information data identifying unit that identifies that the second data stream includes the transmission overlapping information data conforming to a transmission format of the stereoscopic image data based on the identification information obtained by the identification information obtaining unit,
wherein the multiplexed data stream received by the data receiving unit includes identification information for identifying that the second data stream includes the transmission overlapping information data conforming to a transmission format of the stereoscopic image data.

15. A method of receiving stereoscopic image data, comprising:
a data receiving step for receiving a multiplexed data stream having first and second data streams,
the first data stream including stereoscopic image data of a predetermined transmission format having left-eye image data and right-eye image data, and
the second data stream including transmission overlapping information data having data of left-eye overlapping information corresponding to the left-eye image data included in the stereoscopic image data of the predetermined transmission format and data of right-eye overlapping information corresponding to the right-eye image data, area information of a left-eye control area including a part of or the entire area on a left-eye image where left-eye overlapping information based on the transmission overlapping information data is overlapped and a right-eye control area including a part of or the entire area on a right-eye image where right-eye overlapping information based on the transmission overlapping information data is overlapped, and display control information having shift information of the left-eye control area and the right-eye control area;
an image data obtaining step for obtaining the stereoscopic image data from the first data stream of the multiplexed data stream received in the data receiving step;
an overlapping information data obtaining step for obtaining the transmission overlapping information data from the second data stream of the multiplexed data stream received in the data receiving step;
a display control information obtaining step for obtaining the display control information from the second data stream of the multiplexed data stream received in the data receiving step;
a display data generating step for generating display data for overlappingly displaying left-eye overlapping information and right-eye overlapping information in an left-eye image and a right-eye image, respectively, based on the transmission overlapping information data obtained in the overlapping information data obtaining step;
a shift adjustment step for receiving display data generated in the display data generating step, shift-adjusting positions of display data of the left-eye control area and the right-eye control area indicated by area information of the display control information obtained in the display control information obtaining step based on shift information of the display control information obtained in the display control information obtaining step, and outputting the results; and
a data combining step for overlapping display data obtained by shift-adjusting in the shift adjustment step with the stereoscopic image data obtained in the image data obtaining step to obtain output stereoscopic image data.
